# EUROPEAN PATENT SPECIFICATION

(11) **EP 3 437 346 B1**
(45) Date of publication and mention of the grant of the patent: **15.04.2020**
(21) Application number: 16751417.3
(22) Date of filing: 28.07.2016
(51) Int. Cl.: H04W 4/40, H04W 48/18, H04W 76/14

(54) **SYSTEMS AND METHODS FOR CENTRALIZED AND DECENTRALIZED COMMUNICATION MODES FOR V2X SERVICES**
SYSTEME UND VERFAHREN FÜR MODI ZUR ZENTRALISIERTEN UND DEZENTRALISIERTEN KOMMUNIKATION FÜR V2X-DIENSTE
SYSTÈMES ET PROCÉDÉS DE MODES DE COMMUNICATION CENTRALISÉS ET DÉCENTRALISÉS POUR DES SERVICES V2X

(30) Priority: 28.03.2016 US 201662314196 P
(43) Date of publication of application: 06.02.2019
(73) Proprietor: Intel IP Corporation, Santa Clara, CA 95054 (US)
(72) Inventor: PINHEIRO, Ana Lucia A., Hillsboro, OR 97124 (US); CAVALCANTI, Dave, Portland, OR 97229 (US)
(74) Representative: Lang, Johannes
(86) International application number: PCT/US2016/044575
(87) International publication number: WO 2017/171906

(56) References cited:
- WO-A1-2010/079143
- US-B2- 9 241 365
- A Kwoczek ET AL: "5G Automotive Vision", , 20 October 2015 (2015-10-20), XP055319749, Retrieved from the Internet: URL:https://5g-ppp.eu/wp-content/uploads/2 014/02/5G-PPP-White-Paper-on-Automotive-Ve rtical-Sectors.pdf [retrieved on 2016-11-15]

## Description

### RELATED APPLICATIONS

This application is an international filing based on U.S. Provisional Patent Application No. 62/314,196, titled CENTRALIZED VERSUS DECENTRALIZED COMMUNICATION MODES FOR V2X SERVICES, filed March 28, 2016.

### TECHNICAL FIELD

The present disclosure generally relates to vehicular communication services, such as vehicle-to-vehicle (V2V), vehicle-to-pedestrian (V2P), and vehicle-to-infrastructure (V21), which are sometimes referred to individually and collectively as vehicle-to-anything or vehicular communication (V2X).

### BACKGROUND INFORMATION

Wireless mobile communication technology enables communication of mobile user equipment devices, such as smartphones, tablet computing devices, laptop computers, and the like. Mobile communication technology may enable connectivity of various types of devices, supporting the "Internet of things." Vehicles are one example of mobile user equipment that may benefit from connectivity over wireless mobile communication technology.

Wireless mobile communication technology uses various standards and protocols to transmit data between a base station and a wireless communication device. Wireless wide area network (WWAN) communication system standards and protocols can include, for example, the 3rd Generation Partnership Project (3GPP) long term evolution (LTE), and the IEEE 802.16 standard, which is commonly known to industry groups as worldwide interoperability for microwave access (WiMAX). Wireless local area network (WLAN) can include, for example, the IEEE 802.11 standard, which is commonly known to industry groups as Wi-Fi. Other WWAN and WLAN standards and protocols are also known.
WO2010079143 relates to a system for enabling IPv6-based communication in a VANET (Vehicular Ad Hoc NETwork), wherein said VANET includes a plurality of communication nodes, said communication nodes being aware of their geographic position, as well as one or more attachment points providing access to an external infrastructure network, in particular the Internet, and wherein a position-based geographical routing protocol is implemented for routing data packets within the said VANET.

### BRIEF DESCRIPTION OF THE DRAWINGS

FIG. 1 illustrates one example of an environment in which the present systems and methods may be implemented.
FIG. 2 is a message sequence diagram illustrating a first example of V2X mode selection.
FIG. 3 is a message sequence diagram illustrating a second example of V2X mode selection.
FIG. 4 is a message sequence diagram illustrating a third example of V2X mode selection.
FIG. 5 is a message sequence diagram illustrating a fourth example of V2X mode selection.
FIG. 6 is a message sequence diagram illustrating another example of V2X mode selection.
FIG. 7 is an example of abstract syntax notation one (ASN.1) code that may be included in a system information block for indicating a message type to V2X mode mapping.
FIG. 8 is an example of how mapping information may be provided in an OMA-DM message.
FIG. 9 is a block diagram illustrating how various logical channels and their associated queues may be mapped to physical channels.
FIG. 10 is a message sequence diagram illustrating yet another example of V2X mode selection.
FIG. 11 is a flow diagram of a method for V2X communication.
FIG. 12 is a flow diagram of a method for V2X communication.
FIG. 13 is a flow diagram of a method for V2X communication.
FIG. 14 is a block diagram illustrating electronic device circuitry that may be eNB circuitry, UE circuitry, network node circuitry, or some other type of circuitry in accordance with various embodiments.
FIG. 15 is a block diagram illustrating, for one embodiment, example components of a UE, MS device, or eNB.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of the disclosed embodiments. However, it will be apparent to those skilled in the art having the benefit of the present disclosure that the various aspects of the embodiments may be practiced in other examples that depart from these specific details. In certain instances, descriptions of well-known devices, circuits, and methods are omitted so as not to obscure the description of the embodiments with unnecessary detail.

In 3GPP radio access networks (RANs) in LTE systems, a base station may include Evolved Universal Terrestrial Radio Access Network (E-UTRAN) Node Bs (also commonly denoted as evolved Node Bs, enhanced Node Bs, eNodeBs, or eNBs) and/or Radio Network Controllers (RNCs) in an E-UTRAN, which communicate with a wireless communication device, known as user equipment (UE). In LTE networks, an E-UTRAN may include a plurality of eNBs and may communicate with a plurality of UEs. An evolved packet core (EPC) may communicatively couple the E-UTRAN to an external network, such as the internet. LTE networks include radio access technologies (RATs) and core radio network architecture that can provide high data rate, low latency, packet optimization, and improved system capacity and coverage.

In homogeneous networks, a node, also called a macro node or macro cell, may provide basic wireless coverage to wireless devices in a cell. The cell may be the area in which the wireless devices can communicate with the macro node. Heterogeneous networks (HetNets) may be used to handle the increased traffic loads on the macro nodes due to increased usage and functionality of wireless devices. HetNets may include a layer of planned high power macro nodes (macro-eNBs or macro cells) overlaid with layers of lower power nodes (small cells, small-eNBs, micro-eNBs, pico-eNBs, femto-eNBs, or home eNBs (HeNBs)) that may be deployed in a less well-planned or even entirely uncoordinated manner within the coverage area (cell) of a macro node. The lower power nodes may generally be referred to as "small cells," small nodes, or low power nodes. HetNets may also include various types of nodes utilizing varying types of RATs, such as LTE eNBs, 3G NodeBs, Wi-Fi APs, and WiMAX base stations.

As used herein, the terms "node" and "cell" are both intended to be synonymous and refer to a wireless transmission point operable to communicate with multiple wireless mobile devices, such as a UE, or another base station. Furthermore, cells or nodes may also be Wi-Fi access points (APs), or multi-radio cells with Wi-Fi/cellular or additional RATs. For example, nodes or cells may include various technologies such that cells operating on different RATs are integrated in one unified HetNet.

Vehicular communication is a relatively new and rapidly emerging research and development area opening new market opportunities for wireless communication systems. Vehicular communication can include vehicle-to-vehicle (V2V) (e.g., communication between a vehicle and another vehicle); vehicle-to-pedestrian (V2P) (e.g., communication between a vehicle and a device carried by an individual, such as a pedestrian, cyclist, driver, or passenger); and vehicle-to-infrastructure (V2I) (e.g., communication between a vehicle and a road side unit (RSU), which is a transportation infrastructure entity, for example, an entity transmitting speed notifications), which are individually and/or collectively referred to as vehicle-to-anything (V2X) communications.

In general, the information shared by vehicles can go either directly to another vehicle or to a Road Side Unit (RSU). Presently, LTE has two separate interfaces for this communication. One is the LTE Uu interface, which connects the vehicle (e.g., UE modem) to the eNodeB. The other is the D2D interface (aka ProSe interface, or LTE PC5), which connects two or more vehicles (e.g., 2+ UEs).

These interfaces are different, including each having a distinct protocol stack. Therefore, a UE that wants to transmit to both the RSU and other vehicles/UEs, would need to transmit using both the Uu and the D2D interfaces. This approach increases complexity and power consumption of the UE, may cause some latency in the communication, and may overload the radio interface.

Furthermore, there are situations/scenarios where it may be unnecessary to transmit over two (i.e., both) interfaces. For instance, a roadway section or intersection may be instrumented with a variety of roadside sensors, which provide a complete set of information required to support V2X safety applications within a given area. In this case, vehicles (UEs) may be able to rely completely on the network infrastructure to support V2X safety applications and could disable direct communications through the D2D interface.

In order to better support the transitions between two types of communication, the present systems and methods propose various methods for a UE to identify/decide if a V2X message (e.g., V2X safety message) should be transmitted via the Uu interface, the D2D interface, or both interfaces. In some cases, these various methods may be based on operator policies and rules.

The information being shared with other UEs for V2X applications and self-driving cars is typically associated with safety related messages (e.g., Basic Safety Messages (BSM), Cooperative Awareness Message (CAM) or Decentralized Environmental Notification Message (DENM) messages) which contain information about the vehicle sending the information. Such safety messages help other vehicles make a decision on the next action (e.g., stop, reduce speed, merge, etc.). This information may be sent to the vehicle using the Uu interface, which is referred to herein as V21 communication, or using the D2D communication, which is referred to herein as V2V communication. The network may also aggregate and process information received (through V2I) from the UEs and provide support in the form of warning messages and commands that could also help vehicles make decisions locally.

It is important to note that for effective intelligent transportation systems, information needs to be disseminated among all cars in a given area to facilitate decision making by the self-driving algorithms. Given the large volumes of vehicles and various coverage area scenarios, this process has to be done efficiently in terms of network resources.

One option is for the UE to send a V21 message via the LTE-Uu and have the network forward and disseminate the V21 message to multiple UEs over the LTE-Uu interface (e.g., the cellular communication method). Another option is for the UE to send the message directly to other UEs using the D2D communication method.

There are benefits and tradeoffs to both types of communication. D2D communication allows for lower latency in the end-to-end transmission. However, in D2D communication, the vehicle may transmit redundant information and many vehicles may be transmitting at the same time. For example, if a pedestrian is approaching to cross the street, then all vehicles that see the pedestrian would potentially send a "pedestrian warning" message. All vehicles in the area would be receiving the messages sent by the other vehicles. If, in this example, there are 4 vehicles, then all 4 would send the message and each vehicle would receive the message from 3 other vehicles and would have to pass the message to the application layer, only to find out that the message contains the same information.

The present systems and methods improve this scenario by proposing the ability for the network to configure and reconfigure when the user should be using each of the two modes of operation.

In the first mode (i.e., Mode 1, Decentralized Approach), vehicles use the D2D interface for V2X communication. As noted above, one of the advantages of this mode is that it provides low latency for end-to-end message transmission.

One of the challenges associated with this first mode, however, is that depending on the number of cars (i.e., the number of vehicles transmitting at any given time), the traffic on the D2D interface may reach a maximum capacity. Because this mode may require too many transmissions over the D2D interface, some optimizations may be implemented in order to reduce traffic and avoid congestion on the D2D interface. One optimization is that, when a vehicle receives a message that provides some information (e.g., "pedestrian warning"), that vehicle would refrain from transmitting a message containing the same information (e.g., it would not send another "pedestrian warning" message) for a pre-defined period of time. This would avoid redundant messages.

However, this optimization is not without its own challenges. One of the challenges associated with this optimization is that not all vehicles may receive the original message. Therefore, avoiding the transmission of the same message for a pre-defined period of time could result in some loss of information to those vehicles. Additionally, this optimization requires that each vehicle to process the information and make a decision as to whether to refrain from sending the message for the pre-defined period of time. In some cases, the second message may already be in the lower layers ready for transmission by the time the information is processed and the decision is determined, and it would be difficult for the UE to stop the transmission of that second message.

However, regardless of optimization, depending on the number of cars (i.e., the number of vehicles transmitting at any given time), the traffic on the D2D interface may still reach a maximum capacity.

In the second mode (i.e., Mode 2, Centralized Approach), all vehicles send the messages to the network (e.g., RSU) using the V21 communication via Uu interface, instead of the V2V communication via D2D interface. In this case the RSU will receive all messages, and then it would eliminate the redundant messages, and only forward to the UEs in the vicinity, a single message containing the most up to date information.

One of the advantages of this mode is that because the capacity of the Uu interface is potentially much higher than the capacity of the D2D interface, this type of mode of communication would allow for support of many more cars in a given vicinity. Additionally, in the second mode, the UEs would only need to listen to the Uu interface, and would not need to alternate between V21 and V2V reception.

However, some of the challenges associated with this second mode are that the latency for end to end message transmission is larger than the one experienced in Mode 1 and there may be areas that may not have RSUs, and thus this option may not be possible.

Because there are advantages and disadvantages to each of the option, we propose various systems and methods to alternate between a centralized mode and a decentralized mode, and vice-versa. Additionally or alternatively, the various systems and methods allow for the usage of a third mode which uses both the centralized mode and the decentralized mode simultaneously. This switch is then triggered based on the operator's policy and, optionally, a network command to the UE, for example.

In one example, the operator pre-configures the UE to use V2I whenever there is an RSU present. Additionally or alternatively, in another example, the network sends a message to the UEs directing the UE to use Uu interface or D2D interface. The signaling to the UE may be done either via broadcast, multicast, or dedicated message.

The decision on the network side may be determined based on one or more of a variety of factors, including: the number of vehicles in the area, the location (some areas have a greater propensity for accidents than others), the presence of RSUs or the number of RSUs in the vicinity, and what other services are currently being supported in the Uu interface (which the network may use to perform load balancing between Uu and D2D interfaces).

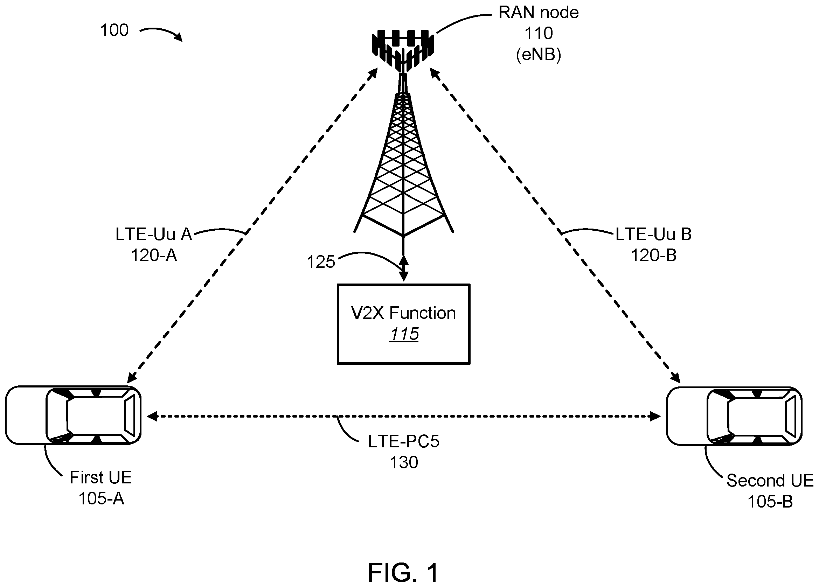

Referring now to the figures, FIG. 1 illustrates one example of an environment 100 in which the present systems and methods may be implemented. The environment 100 includes a first UE 105-A (i.e., a first vehicle), a second UE 105-B (i.e., a second vehicle), and a RAN node 110. Although represented as vehicles, the first UE 105-A and second UE 105-B may be integrated into the vehicles or may be a standalone device (e.g., phone, tablet, etc.) that are associated with the vehicles. In either case, as used herein, vehicles are referred to as UEs (e.g., first UE 105-A and second UE 105-B).

The RAN node 110 provides access to the network (e.g., the mobile phone network) and may operate according to one or more mobile telecommunications standards (e.g., 3G, 4G LTE, 4G LTE-A, 5G, etc.). In one example, the RAN node 110 may be an eNB 110. For convenience, RAN node 110 is hereafter referred to as eNB 110.

In some cases, the eNB 110 may operate as a road side unit (RSU). In one example, the eNB 110 operates as an RSU by hosting/providing one or more V2X services (e.g., safety service, collision avoidance service, traffic management service, etc.). In some cases, V2X services are provided in connection with a V2X function 115. The eNB 110 may be connected to the V2X function 115 via connection 125. In one example, the V2X function 115 may be included as a new element or as part of an existing element in the core network (e.g., the evolved packet core (EPC)). In another example, the V2X function 115 may be a server that is external to the EPC (and may be accessible via the Internet, for example). As an RSU, the eNB 110 may provide one or more V2X services to UEs (e.g., first UE 105-A and second UE 105-B).

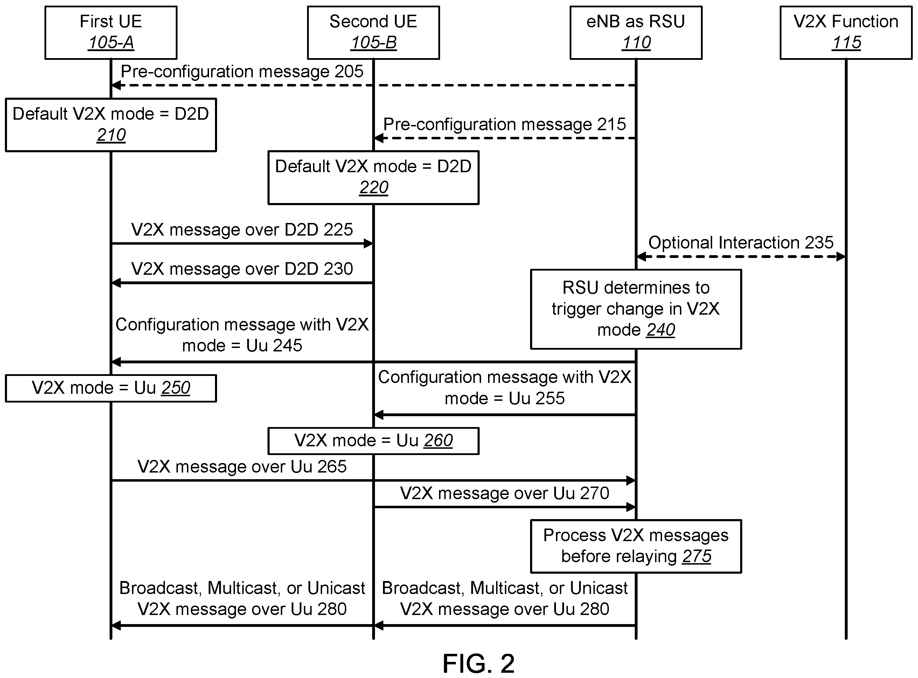

Each UE (e.g., first UE 105-A and second UE 105-B) may be configured to operate in Mode 1 ("Decentralized Approach"), Mode 2 ("Centralized Approach"), or a combination of Mode 1 and Mode 2 (e.g., Mode 3, "Combined Approach"). In Mode 1, a UE transmits V2X messages directly to other UEs (e.g., V2V via D2D) via the LTE-PC5 interface (e.g., LTE PC5 130). In Mode 2, a UE transmits V2X messages directly to the eNB 110 (e.g., V2I) via the LTE-Uu interface (e.g., LTE-Uu A 120-A, LTE-Uu B 120-B). In Mode 3, a UE transmits V2X messages both directly to other UEs via the LTE-PC5 interface and directly to the eNB 110 via the LTE-Uu interface. A UE may determine which mode to operate in based on configuration information received from the network (from the V2X function 115, for example). FIGS. 2-6 and 10 illustrate various examples of the message flow related to a UE determining which mode to operate in.

FIG. 2 is a message sequence diagram illustrating a first example of V2X mode selection. In one example, the network may preconfigure UEs as to which V2X mode they should select (e.g., a default V2X mode). In one example, the default V2X mode is the V2X mode that should be used unless specifically instructed otherwise by the network. A default V2X mode may be beneficial for cases when a UE is not in the coverage area of an RSU (so Mode 2 is not an option, for example) or when the UE is consistently in congested areas where D2D resources would be at capacity (so Mode 1 is not a good option, for example).

The eNB 110 (which is operating as an RSU, for example), may send a pre-configuration message 205 to the first UE 105-A indicating that the default V2X mode for the first UE 105-A is D2D (e.g., Mode 1, Decentralized). Examples of the pre-configuration message 205 include a broadcast message (received on the broadcast channel (BCH), for example), a multimedia broadcast multicast service (MBMS) message, a dedicated message (e.g., medium access control (MAC) message, downlink control information (DCI) message), or an open mobile alliance (OMA) device management (OMA-DM) message. In response to the pre-configuration message 205, the first UE 105-A may set its default V2X mode to D2D 210 (e.g., Mode 1).

The eNB 110 may also send a pre-configuration message 215 to the second UE 105-B indicating that the default V2X mode for the second UE 105-B is D2D. In response to the pre-configuration message 215, the second UE 105-B may set its default V2X mode to D2D 220.

As illustrated in FIG. 2, the pre-configuration messages 205, 215 are optional (designated by a dashed line). In an alternative embodiment, the first and second UEs 105 may have been pre-configured with a default V2X mode at the time of manufacture.

Operating in accordance with the D2D mode (e.g., Mode 1), the first UE 105-A may transmit a V2X message over D2D 225 to the second UE 105-B. Similarly, operating in accordance with D2D, the second UE 105-B may transmit a V2X message over D2D 230 to the first UE 105-A.

In one example, the RSU determines to trigger a change in V2X mode 240. The eNB as RSU 110 may determine to trigger a change in V2X mode in response to a variety of factors, including for example, a number of vehicles in a coverage area, a number of V2X services offered in a coverage area, a desired resource balance between interfaces in the coverage area, UE specific needs, etc. In some embodiments, the eNB as RSU 110 may determine to trigger a change in V2X mode 240 based on (optional) interaction with the V2X function 115. For instance, to coordinate the V2X mode in the coverage area of the eNB 110 with respect to the V2X mode of surrounding coverage areas.

In one example a V2X function 115 may send commands to enable/disable the different modes of operation at different eNBs/RSUs. This decision may be based on external information such as information from ITS servers that have information regarding the location of RSUs and their capabilities. The RSU may also use local information (e.g., traffic level) to make a decision, as explained above.

Upon determining to trigger a change in a V2X mode 240, the eNB 110 as RSU transmits a configuration message 245 to the first UE 105-A indicating that the V2X should be Uu (e.g., Mode 2, Centralized). Examples of the configuration message 245 include a broadcast message, an MBMS message, a dedicated message, and an OMA-DM message.

In some cases, the type of message that is used as the configuration message 245 may select the scope of applicability of the configuration message (e.g., configuration message 245). For example, a broadcast message may be used to send the same configuration message to all UEs within a coverage area (i.e., all UEs that receive the BCH). In another example, an MBMS message may be used to send the same configuration message to all the UEs within a coverage area. Alternatively, an MBMS message may be used to send the same configuration message to a selected group of UEs within a coverage area (using a group specific MBMS message, for example). In a further example, a dedicated message (e.g., a DCI message) may be used to send a specific configuration message to a specific user. In yet another example, an OMA-DM message may be used to send a specific configuration message to a specific user.

In response to the configuration message indicating the Uu V2X mode 245, the first UE 105-A may switch and/or set the V2X mode to be Uu 250. Similarly, the eNB as RSU 110 may transmit a configuration message indicating that the V2X mode should be Uu 255 to the second UE 105-B. As can be appreciated by the discussion above, depending on the type of configuration message 255 that is used (e.g., broadcast, MBMS, dedicated, or OMA-DM), the configuration message 245 to the first UE 105-A and the configuration message 255 to the second UE 105-B may be the same configuration message or different configuration messages (as shown). In response to the configuration message indicating the Uu V2X mode 255, the second UE 105-B my switch and/or set the V2X mode to be Uu 260.

Operating in accordance with the Uu mode (e.g., Mode 2), the first UE 105-A may transmit a V2X message over Uu 265 directly to the eNB as RSU 110. Similarly, operating in accordance with the Uu mode, the second UE 105-B may transmit a V2X message over Uu 270 directly to the eNB as RSU 110. The eNB as RSU 110 processes the V2X message before relaying them to one or more UEs 275. For example, the eNB as RSU 110 aggregates and generates one or more V2X messages based on the aggregated V2X messages (e.g., V2X messages 265 and 270). The eNB as RSU 110 transmits (e.g., broadcasts, multicasts, or unicasts - depending on the determined dissemination requirements) the aggregated/generated V2X message to the first and/or second UE 105 over the Uu interface 280.

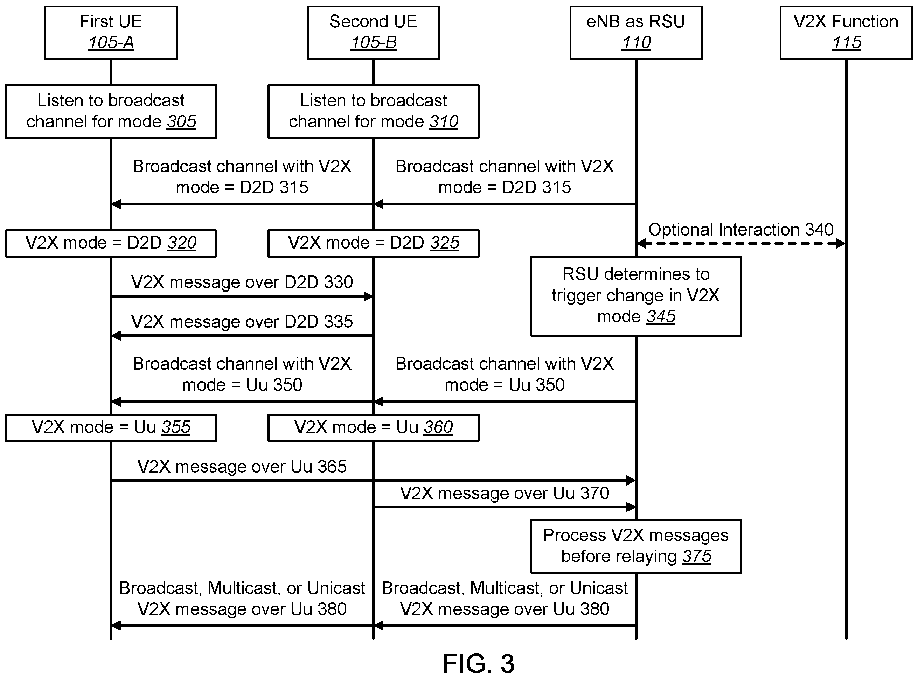

FIG. 3 is a message sequence diagram illustrating a second example of V2X mode selection. In one example, the first and second UEs 105 may be configured to select the V2X mode to use based on configuration information included on a broadcast channel (BCH). This may enable all UEs within a given coverage area to uniformly operate using the same V2X mode.

The first UE 105-A and the second UE 105-B may listen to the broadcast channel for an indication of the V2X mode 305, 310. The eNB as RSU 110 transmits the V2X mode to use via the broadcast channel 315. In response to the received broadcast channel with the indicated V2X mode (D2D in this case), the first UE and the second UE 105 may select and operate according to the D2D V2X mode 320, 325. As discussed with respect to FIG. 2, the first and second UEs 105 may operate according to the D2D V2X mode (e.g., V2X messages 330, 335).

The RSU may determine to trigger a change in the V2X mode 345 (based on optional interaction 340 with the V2X function 115, for example). Accordingly, the eNB as RSU 110 may transmit an updated V2X mode (e.g., to Uu mode) via the broadcast channel 350. In response, the first and second UEs 105 may switch to operating in the Uu V2X mode 355, 360. As discussed above with respect to FIG. 2, the first and second UEs may operate according to the Uu V2X mode (e.g., V2X messages 365, 370, processing at the eNB 110, and then transmitting a broadcast, multicast, or unicast V2X message 380).

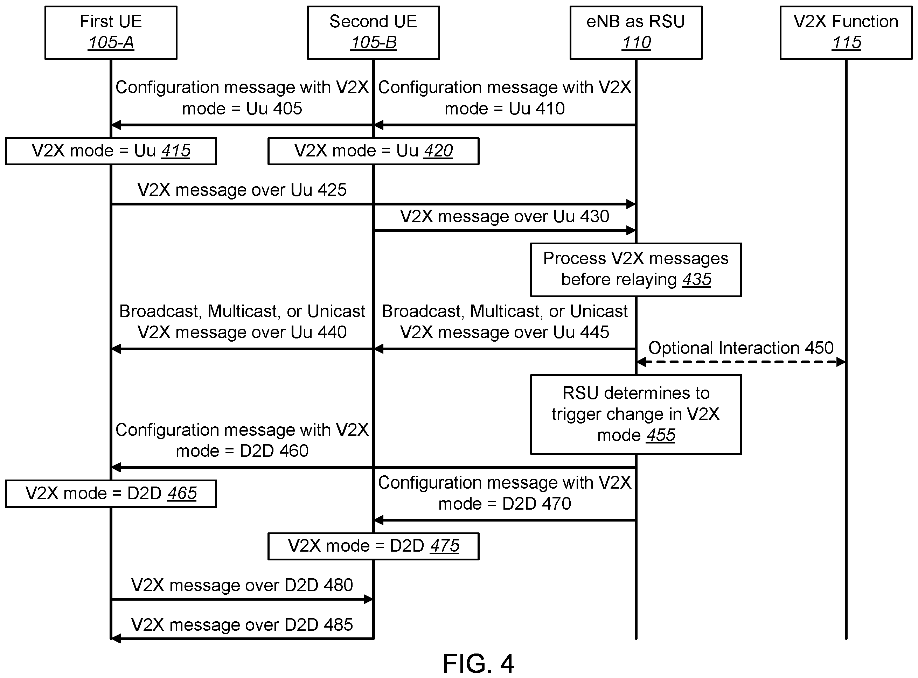

FIG. 4 is a message sequence diagram illustrating a third example of V2X mode selection. In one example, FIG. 4 may be viewed as an extension of FIG. 2 with the configuration messages for Uu V2X mode 405, 410 corresponding with the configuration messages for Uu V2X mode 245, 255 of FIG. 2. That is, the configuration messages 405, 410 (similarly V2X messages 460, 470) may be any one or a combination of a broadcast channel message, a MBMS message, a dedicated message, of an OMA-DM message. As discussed with respect to FIG. 2, the first and second UE 105 may select to 415, 420 and then operate according to the Uu V2X mode (e.g., V2X messages 425, 430, and broadcast, multicast, or unicast V2X messages 440, 445).

The eNB as RSU 110 may determine to trigger a change in V2X mode 455 (based on optional interaction 450 with the V2X function 115, for example) and may transmit one or more configuration messages with an indicated V2X mode (i.e., D2D V2X mode) 460, 470 to the first and second UEs 105, respectively. As discussed above, the first and second UEs 105 may switch to 465, 475 and then operate according to the D2D V2X mode (e.g., V2X messages 480, 485).

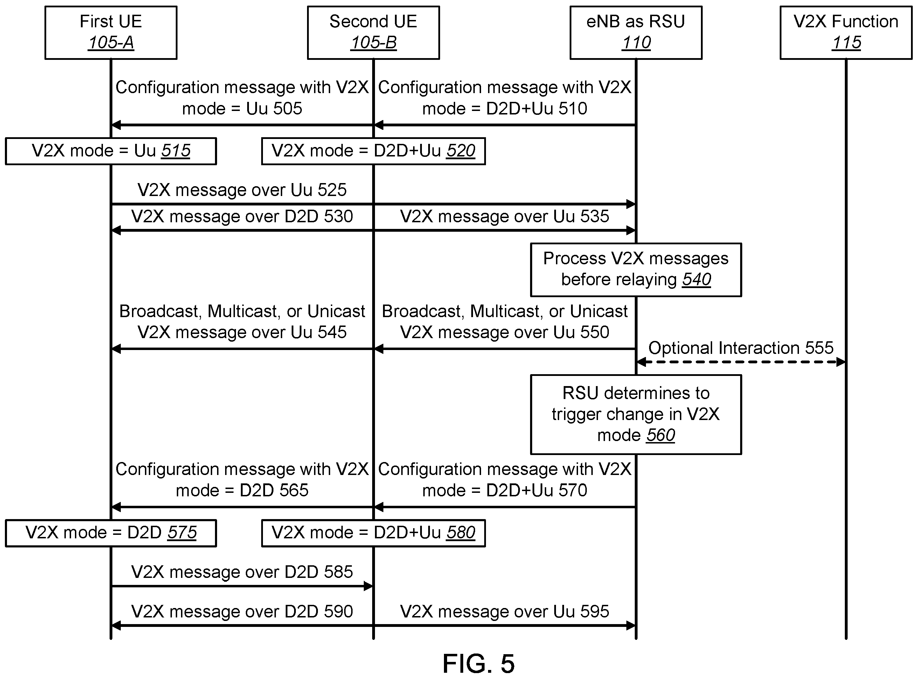

FIG. 5 is a message sequence diagram illustrating a fourth example of V2X mode selection. As illustrated in FIG. 5, one or more UEs (e.g., the second UE 105-B) may be configured to operate in a different mode (e.g., Mode 3, Combined) than one or more other UEs (e.g., the first UE 105-A). In one example, the second UE 105-B may be an emergency vehicle (e.g., police, ambulance, fire) that may benefit from using both the D2D V2X mode and the Uu V2X mode (for faster and/or more comprehensive communication, for example).

The eNB 110 may transmit a configuration message indicating a Uu V2X mode 505 to the first UE 105-A. Depending on the type of configuration message that is used, the second UE 105-B may or may not receive the same configuration message 505. In one example, the configuration message 505 is a broadcast message that is received by both the first UE 105-A and the second UE 105-B. In this example, the eNB as RSU 110 may send an additional configuration message 510 specific to the second UE (e.g., a selective MBMS message, dedicated message, or OMA-DM message) indicating that the second UE is to use both the D2D and Uu V2X modes (i.e., Mode 3). In an alternative example, the first UE 105-A may receive a first configuration message 505 that is specific to the first UE 105-A (or a specific group of UEs that includes the first UE 105-A) (e.g., a selective MBMS message, dedicated message, or DCI message) and the second UE 105-B may receive a second configuration message 510 that is specific to the second UE 105-B (or a specific group of UEs that includes the second UE 105-B). Therefore, in either case, at least two configuration messages may be used to enable different V2X modes among different UEs.

In some embodiments, a UE is configured to select the V2X mode indicated by the configuration message with the highest specificity. For example, if the second UE 105-B receives both a broadcast channel configuration message and a dedicated configuration message (regardless of the order received, for example), the second UE 105-B may ignore the indicated V2X mode in the broadcast channel configuration message and select the V2X mode indicated in the dedicated configuration message.

In response to the configuration message 505 indicating the Uu V2X mode, the first UE 105-A may select the Uu V2X mode 515 and operate according to the Uu V2X mode (transmit V2X message 525 directly to the eNB 110, for example). In response to the configuration message 510 indicating both the D2D V2X mode and the Uu V2X mode, the second UE 105-B may select both the D2D V2X mode and the Uu V2X mode 520 and operate according to both concurrently. That is, the second UE 105-B both transmits a V2X message directly to the first UE 105-A over D2D 530 and transmits a V2X message directly to the eNB as RSU 110 over Uu 535. As discussed previously, the eNB as RSU 110 processes V2X messages before relaying 540 them to one or UEs via a broadcast, multicast, or unicast V2X message over Uu 545, 550.

As discussed previously, the eNB as RSU 110 determines to trigger a change in V2X mode 560 based on any number of a variety of factors (including optional interaction 555 with the V2X function 115, for example) and transmits one or more configuration messages 565, 570 to indicate the V2X mode that should be selected. The first UE 105-A which was operating in the Uu V2X mode may switch to the D2D V2X mode 575 in response to the configuration message indicating V2X mode 565. The second UE 105-B may continue to use both the D2D V2X mode and the Uu V2X mode. In one example, the configuration message 570 is a broadcast message (i.e., the same broadcast as configuration message 565) and the second UE 105-B may ignore the configuration message 570 and continue operating according to specific messaging (e.g., selective MBMS messaging, dedicated messaging) that it received previously (at configuration message 510, for example). In another example, the configuration message 570 is specific to the second UE 105-B and the second UE 105-B selects 580 both the D2D V2X mode and the Uu V2X mode (e.g., Mode 3) based on the configuration message 570 that indicates both the D2D V2X mode and the Uu V2X mode.

The first UE 105-A may operate according to the D2D V2X mode and may transmit a V2X message 585 directly to the second UE 105-B over D2D. The second UE 105-B may operate according to both the D2D V2X mode and the Uu V2X mode and may transmit a V2X message directly to the first UE 105-A over D2D 590 and concurrently transmit a V2X message directly to the eNB as RSU 110 over Uu 595.

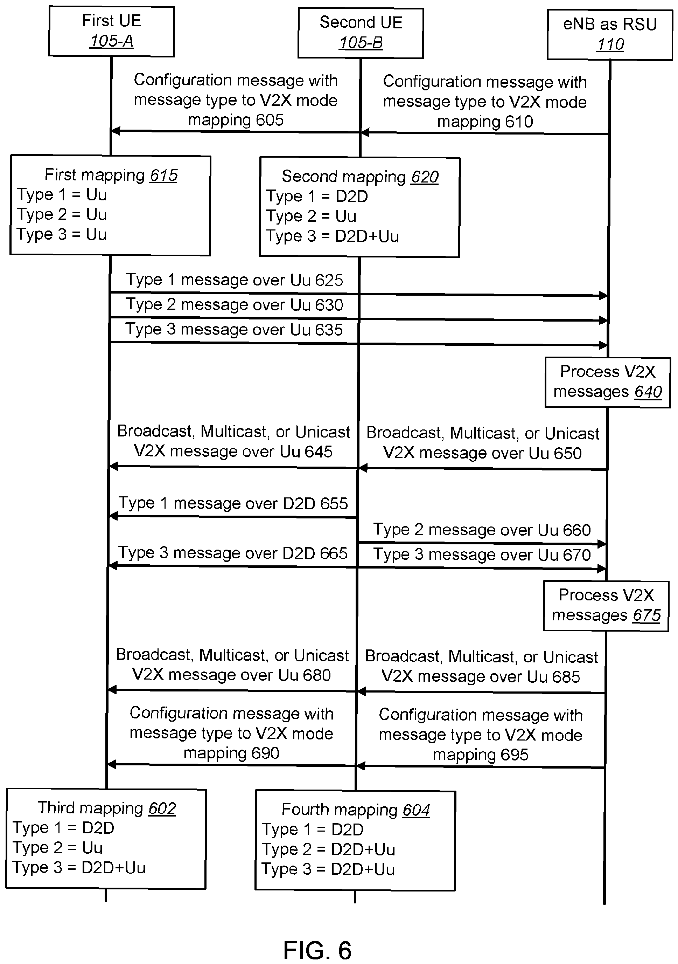

FIG. 6 is a message sequence diagram illustrating another example of V2X mode selection. In some embodiments, there may be different types of V2X messages (e.g., probe messages, warning messages, critical messages, etc.). In some cases, the type of message may also influence if a message is sent via D2D, Uu or both interfaces. Messages may be categorized and the network may configure the message transmission mode (Uu, D2D, or both) based on the message category. This could be pre-configured in the UE or signaled to the UE either via broadcast, multicast, dedicated, or OMA-DM message.

In one example, the eNB 110 as RSU may send one or more configuration messages to configure the first and second UEs 105 with message type to V2X mode mappings. For instance, the eNB 110 as RSU may send one or more configuration messages 605 that indicate a first mapping 615 of message type to V2X mode. In one example, the first mapping 615 maps each type of message to the same V2X mode (Uu in this case). It is understood that this first mapping 615 corresponds to a general indication to use a single V2X mode as discussed in the preceding examples (therefore, it is appreciated that the mapping format illustrated in FIG. 6 may be applied in each of the examples described in FIGS. 2-5).

The eNB 110 as RSU may send one or more configuration messages 610 to the second UE 105-B that indicate a second mapping 620 of message type to V2X mode. In one example, the second mapping 620 maps different types of V2X messages to different V2X modes. For instance, the first type is mapped to the D2D V2X mode, the second type is mapped to the Uu V2X mode, and the third type is mapped to both the D2D V2X mode and the Uu V2X mode (e.g., Mode 3). Such mappings may be stored in the memories of the respective UEs 105. The first and second UEs 105 may then each operate according to their respective mappings.

For example, the first UE 105-A may transmit a type 1 V2X message directly to the eNB 110 over Uu 625, a type 2 V2X message directly to the eNB 110 over Uu 630, and a type 3 V2X message directly to the eNB 110 over Uu 635. In one example, the eNB 110 as RSU may process the V2X messages 640 and transmit one or more broadcast, multicast, or unicast V2X messages to the first and/or second UEs over Uu 645, 650.

The second UE 105-B, which has a second mapping 620 may transmit a type 1 V2X message directly to the first UE 105-A over D2D 655, a type 2 V2X message directly to the eNB 110 over Uu 660, and both a type 3 V2X message directly to the first UE 105-A over D2D 665 and a type 3 V2X message directly to the eNB 110 over Uu 670. As discussed previously, the eNB 110 as RSU may process V2X messages 675 and may transmit one or more broadcast, multicast, or unicast V2X messages over Uu 680, 685. In response to a trigger to change V2X mode, the eNB 110 as RSU may transmit one or more configuration messages that indicate the same or an updated message type to V2X mode mapping.

The eNB 110 as RSU may send one or more configuration messages 690 that indicate a third mapping 602 of message type to V2X mode. In one example, the third mapping 602 maps different types of V2X messages to different V2X modes. For instance, the first type is mapped to the D2D V2X mode, the second type is mapped to the Uu V2X mode, and the third type is mapped to both the D2D V2X mode and the Uu V2X mode (e.g., Mode 3)

The eNB 110 as RSU may send one or more configuration messages 695 to the second UE 105-B that indicate a fourth mapping 604 of message type to V2X mode. In one example, the fourth mapping 604 maps different types of V2X messages to different V2X modes. For instance, the first type is mapped to the D2D V2X mode, the second type is mapped to both the D2D V2X mode and the Uu V2X mode (e.g., Mode 3), and the third type is mapped to both the D2D V2X mode and the Uu V2X mode (e.g., Mode 3). As discussed previously, the first and second UEs 105 may each operate according to their respective mappings.

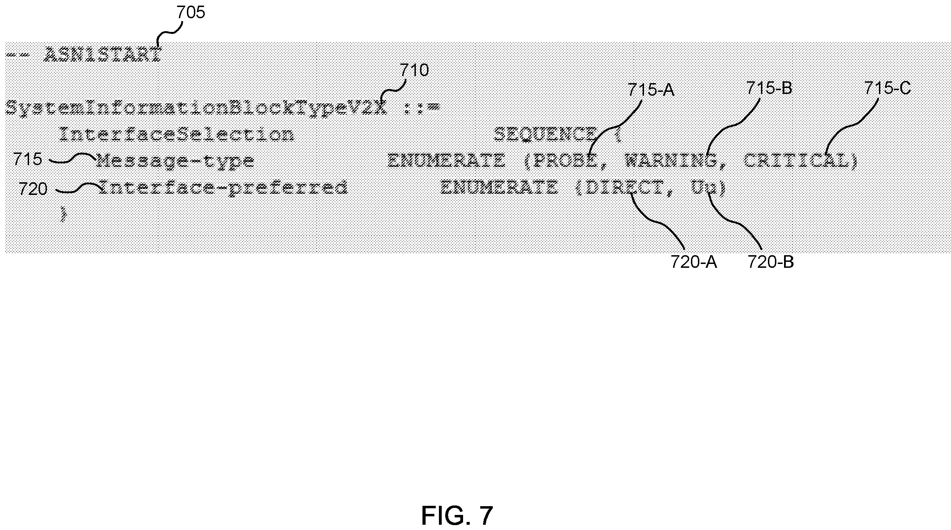

FIG. 7 is an example of abstract syntax notation one (ASN.1) code 705 that may be included in a system information block (a newly defined system information block, for example) for indicating a message type to V2X mode mapping. In one example, the system information block that includes the ASN.1 code 705 is transmitted on the broadcast channel (BCH). In one example, the ASN.1 code 705 defines a mapping 710 of message type 715 (e.g., probe 715-A, warning 715-B, critical 715-C) to preferred interface 720 (e.g., direct 720-A, Uu 720-B).

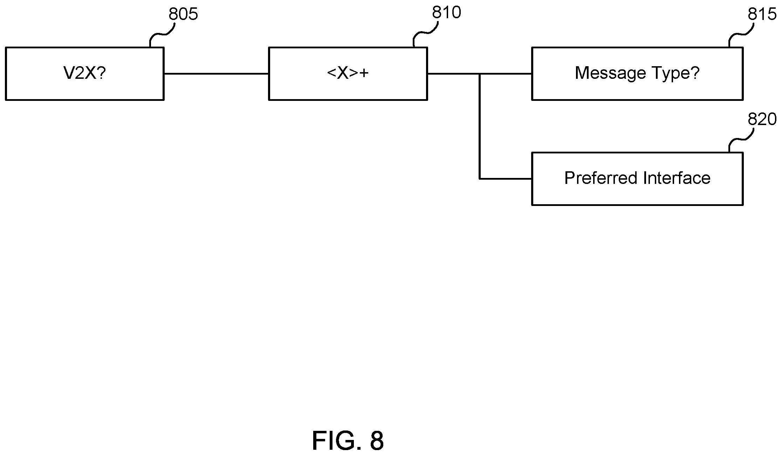

FIG. 8 is an example of how mapping information may be provided in an OMA-DM message. One method to configure the UE is via OMA-Management Object (OMA-MO), as shown in the FIG. 8. In this example, each message type 815 maps into a preferred interface 820. Preferred interfaces include D2D or Uu as described herein. Other types of interface, however, can be added.

The message types discussed herein include "probe", "warning", and "critical." In one example, probe messages may contain information about status of components inside the car and could be stored in a dedicated queue for Uu transmission. Warning messages (e.g. traffic jam ahead) could be disseminated over the D2D interface and critical safety messages (e.g. imminent collision) could be sent in both D2D and Uu interfaces to increase the reliability through redundant transmissions.

In one example, a given V2X message 805 will be iteratively compared 810 with a specific message type 815. Upon identifying the message type 815 that matches V2X message 805, the preferred interface 820 that is associated with the identified message type 815 is selected as the interface to use for that V2X message 805. In one example, a mapping of message type to V2X modes may be generated based on one more OMA-DM messages.

Although the above description has referred to three different types of V2X messages (e.g., probe, warning, critical), it is understood that more or less message types may be classified and used without departing from the scope of the described systems and methods.

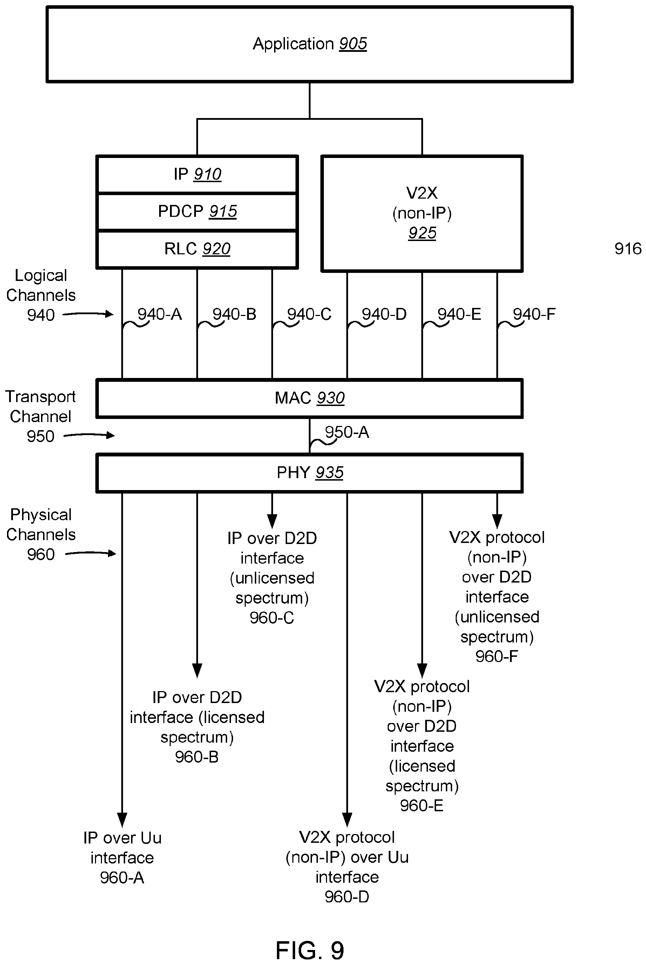

FIG. 9 is a block diagram illustrating how various logical channels 940 and their associated queues may be mapped to physical channels 960. In some cases, a mapping between message types and queue/interfaces could be provided by the network at subscription. Such mapping could also be dynamically updated depending UE capabilities, location and V2X applications enabled by the UE.

As an option, the network may also configure if the V2X message should be transmitted in D2D interface using licensed or unlicensed spectrum. Moreover, the transport protocol does not need to be IP, it could be a different, simpler, less complex and less costly protocol. In some cases, the UE could implement multiple message queues depending on the message types and connect the queues (e.g., logical channels 940) with different interfaces (e.g., physical channels 960). Each queue may have a different transmission priority.

In one example, V2X message type may further be mapped to different logical channels 940 and/or physical channels 960. In some cases, V2X information (for a V2X message, for example) may be initiated by the application layer 905. From the application layer 905, V2X information may either be processed for an internet protocol (IP) or a non-IP protocol, such as a V2X protocol. If an IP protocol is used, then the V2X information is processed through an IP layer 910, a packet data convergence protocol (PDCP) layer 915, and a radio link control (RLC) layer 920. Alternatively, if a non-IP protocol is used (e.g., a V2X protocol), the V2X information is processed through a V2X (non-IP) layer 925. Various logical channels 940 may be available out of the RLC layer 920 on the IP side and out of the V2X (non-IP) layer 925 on the non-IP side. For example, three logical channels 940-A, 940-B, and 940-C are available out of the RLC layer 920 and three logical channels 940-D, 940-E, and 940-F are available out of the V2X (non-IP) layer 925. Each of these logical channels 940 may be associated with a corresponding physical channel 960. Additionally, one or more of these logical channels 940 may be associated with a different queue. In one example, each queue may be associated with a different priority.

Logical channels 940 are processed by the MAC layer 930 and then passed, via a transport channel 950 to the physical (PHY) layer 935. The PHY layer 935 may provide various physical channels 960 (e.g., interfaces). In one example, the PHY layer 935 provides an IP over Uu interface 960-A, an IP over D2D interface using licensed spectrum 960-B, an IP over D2D interface using unlicensed spectrum 960-C, a V2X protocol (non-IP) over Uu interface 960-D, a V2X protocol (non-IP) over D2D interface using licensed spectrum 960-E, and a V2X protocol (non-IP) over D2D interface using unlicensed spectrum 960-F. In one example, logical channel 940-A and its associated queue map to the IP over Uu interface 960-A, logical channel 940-B and its associated queue map to the IP over D2D interface using licensed spectrum 960-B, logical channel 940-C and its associated queue map to the IP over D2D interface using unlicensed spectrum 960-C, logical channel 940-D and its associated queue map to the V2X protocol (non-IP) over Uu interface 960-D, logical channel 940-E and its associated queue map to the V2X protocol (non-IP) over D2D interface using licensed spectrum 960-E, and the logical channel 940-F and its associated queue map to the V2X protocol (non-IP) over D2D interface using unlicensed spectrum 960-F.

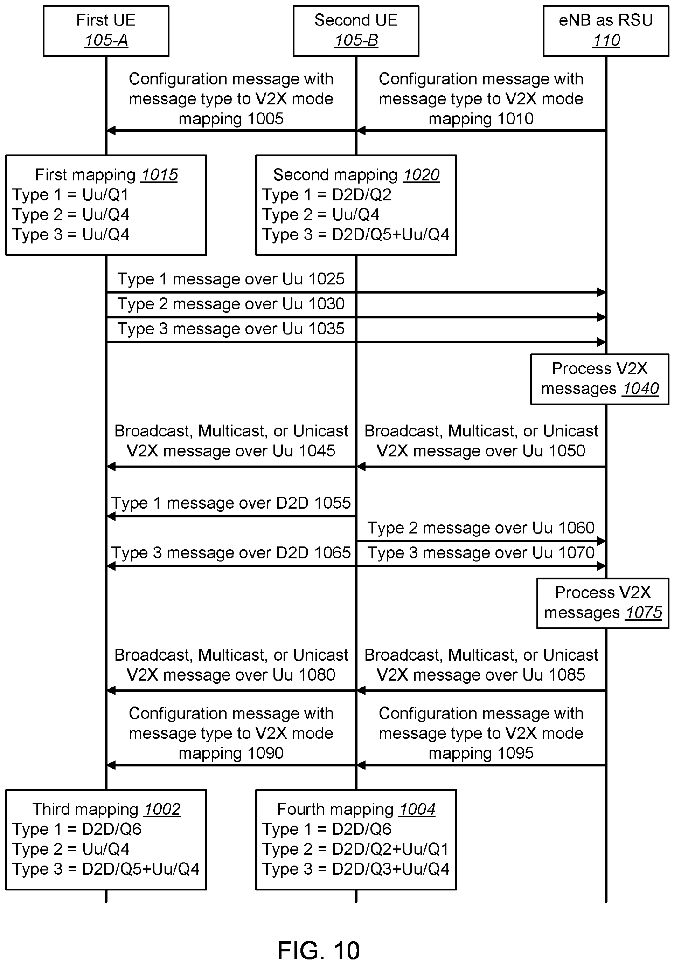

It can be appreciated that the different physical channels 960 and the different logical channels 940 (and their associated queues) that feed in to those corresponding physical channels 960 may experience different priorities (as a result of the different technologies/physical medium used, for example). Accordingly, it may be beneficial to further define the mapping of different V2X message types to specify a particular logical channel (e.g., a particular queue) that should be used. An example of this is illustrated in FIG. 10.

FIG. 10 is a message sequence diagram illustrating yet another example of V2X mode selection. As discussed above, different types of V2X messages (e.g., probe messages, warning messages, critical messages, etc.) may be mapped to different queues (e.g., logical channels). As in the previous examples, messages may be categorized and the network may configure the message transmission mode (Uu, D2D, or both) and queue (logical channels 940-A - 940-F) based on the V2X message category. This could be pre-configured in the UE or signaled to the UE either via broadcast, multicast, dedicated, or OMA-DM message.

In one example, the eNB 110 as RSU may send one or more configuration messages to configure the first and second UEs 105 with message type to V2X mode mappings. For instance, the eNB 110 as RSU may send one or more configuration messages 1005 that indicate a first mapping 1015 of message type to V2X mode. In one example, the first mapping 1015 maps each type of message to the same V2X mode (Uu in this case) but different message queues. For example, the first type of V2X message is mapped to queue 1 (Q1, 940-A, for example) of the Uu interface, the second type of V2X message is mapped to queue 4 (Q4, 940-D, for example) of the Uu interface, and the third type of V2X message is mapped to queue 4 (Q4, 940-D, for example) of the Uu interface. As noted previously, these mappings may be stored in the respective memories of the UEs.

The eNB 110 as RSU may send one or more configuration messages 1010 to the second UE 105-B that indicate a second mapping 1020 of message type to V2X mode. In one example, the second mapping 1020 maps different types of V2X messages to different V2X modes and different message queues. For instance, the first type is mapped to queue 2 (Q2) of the D2D V2X mode, the second type is mapped to queue 4 (Q4) the Uu V2X mode, and the third type is mapped to both queue 5 (Q5) of the D2D V2X mode and queue 4 (Q4) of the Uu V2X mode (e.g., Mode 3). The first and second UEs 105 may each operate according to their respective mappings.

For example, the first UE 105-A may transmit a type 1 V2X message processed through Q1 directly to the eNB 110 over Uu 1025, a type 2 V2X message processed through Q4 directly to the eNB 110 over Uu 1030, and a type 3 V2X message processed through Q4 directly to the eNB 110 over Uu 1035. In one example, the eNB 110 as RSU may process the V2X messages 1040 and transmits one or more broadcast, multicast, or unicast V2X messages to the first and/or second UEs over Uu 1045, 1050.

The second UE 105-B, which has a second mapping 1020 may transmit a type 1 V2X message process through Q2 directly to the first UE 105-A over D2D 1055, a type 2 V2X message processed through Q4 directly to the eNB 110 over Uu 1060, and both a type 3 V2X message processed through Q5 directly to the first UE 105-A over D2D 1065 and a type 3 V2X message processed through Q4 directly to the eNB 110 over Uu 1070. As discussed previously, the eNB 110 as RSU may process V2X messages 1075 and may transmit one or more broadcast, multicast, or unicast V2X messages over Uu 1080, 1085. In response to a trigger to change V2X mode, the eNB 110 as RSU may transmit one or more configuration messages that indicate the same or an updated message type to V2X mode mapping.

The eNB 110 as RSU may send one or more configuration messages 1090 that indicate a third mapping 1002 of message type to V2X mode and queue. In one example, the third mapping 1002 maps different types of V2X messages to different V2X modes and queues. For instance, the first type is mapped to Q6 of the D2D V2X mode, the second type is mapped to Q4 of the Uu V2X mode, and the third type is mapped to both Q5 of the D2D V2X mode and Q4 of the Uu V2X mode (e.g., Mode 3)

The eNB 110 as RSU may send one or more configuration messages 1095 to the second UE 105-B that indicate a fourth mapping 1004 of message type to V2X mode and queue. In one example, the fourth mapping 1004 maps different types of V2X messages to different V2X modes and queues. For instance, the first type is mapped to Q6 of the D2D V2X mode, the second type is mapped to both Q2 of the D2D V2X mode and Q1 of the Uu V2X mode (e.g., Mode 3), and the third type is mapped to both Q3 of the D2D V2X mode and Q4 of the Uu V2X mode (e.g., Mode 3). As discussed previously, the first and second UEs 105 may each operate according to their respective mappings.

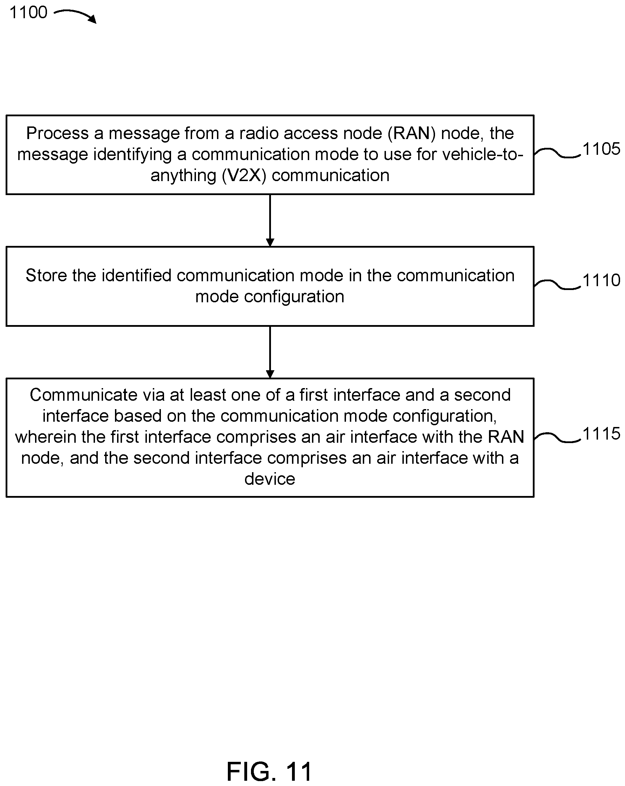

FIG. 11 is a flow diagram of a method 1100 for V2X communication. The method 1100 is performed by the UE 105 illustrated in FIGS. 1-6 and 10. Although the operations of method 1100 are illustrated as being performed in a particular order, it is understood that the operations of method 1100 may be reordered without departing from the scope of the method.

At 1105, a message from a radio access node (RAN) node is processed. The message identifies a communication mode to use for vehicle-to-anything (V2X) communication. At 1110, the identified communication mode is stored in the communication mode configuration. In some embodiments, the communication mode configuration may be stored in a memory of the UE. At 1115, a UE may communicate via at least one of a first interface and a second interface based on the communication mode configuration. The first interface is an air interface with the RAN node and the second interface is an air interface with a device.

The operations of method 1100 may be performed by an application specific processor, programmable application specific integrated circuit (ASIC), field programmable gate array (FPGA), or the like.

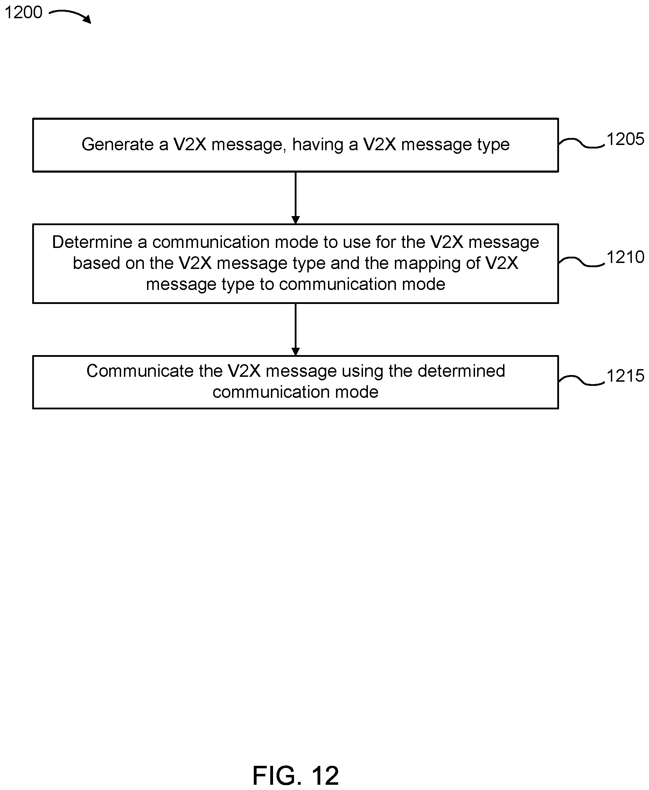

FIG. 12 is a flow diagram of a method 1200 for V2X communication. The method 1200 is performed by the UE 105 illustrated in FIGS. 1-6 and 10. Although the operations of method 1200 are illustrated as being performed in a particular order, it is understood that the operations of method 1200 may be reordered without departing from the scope of the method.

At 1205, a V2X message having a V2X message type is generated. At 1210, a communication mode to use for the V2X message is determined based on the V2X message type and the mapping of V2X message type to communication mode. At 1215, the V2X message is communicated using the determined communication mode.

The operations of method 1200 may be performed by an application specific processor, programmable application specific integrated circuit (ASIC), field programmable gate array (FPGA), or the like.

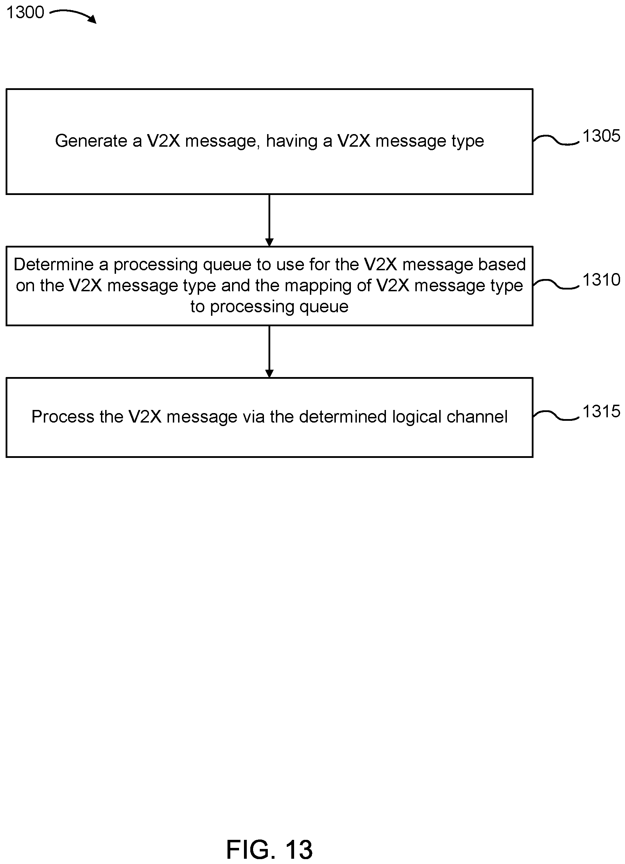

FIG. 13 is a flow diagram of a method 1300 for V2X communication. The method 1300 is performed by the UE 105 illustrated in FIGS. 1-6 and 10. Although the operations of method 1300 are illustrated as being performed in a particular order, it is understood that the operations of method 1300 may be reordered without departing from the scope of the method.

At 1305, a V2X message having a V2X message type is generated. At 1310, a processing queue to use for the V2X message is determined based on the V2X message type and the mapping of V2X message type to processing queue. At 1315, the V2X message is processed via the determined logical channel.

The operations of method 1300 may be performed by an application specific processor, programmable application specific integrated circuit (ASIC), field programmable gate array (FPGA), or the like.

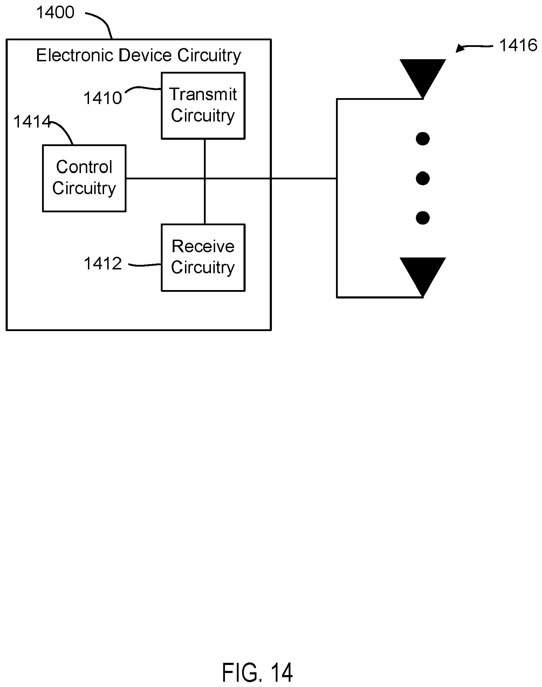

FIG. 14 is a block diagram illustrating electronic device circuitry 1400 that may be eNB (e.g., eNB 110) circuitry, UE circuitry (e.g., UE 105), network node circuitry, or some other type of circuitry in accordance with various embodiments. In embodiments, the electronic device circuitry 1400 may be, or may be incorporated into or otherwise a part of, an eNB, a UE, a mobile station (MS), a BTS, a network node, or some other type of electronic device. In embodiments, the electronic device circuitry 1400 may include radio transmit circuitry 1410 and receive circuitry 1412 coupled to control circuitry 1414. In embodiments, the transmit circuitry 1410 and/or receive circuitry 1412 may be elements or modules of transceiver circuitry, as shown. The electronic device circuitry 1400 may be coupled with one or more plurality of antenna elements 1416 of one or more antennas. The electronic device circuitry 1400 and/or the components of the electronic device circuitry 1400 may be configured to perform operations similar to those described elsewhere in this disclosure.

In embodiments where the electronic device circuitry 1400 is or is incorporated into or otherwise part of a UE, the transmit circuitry 1410 can transmit V2X messages, as shown in FIGS. 2-6 and 10. The receive circuitry 1412 can receive configuration messages (including broadcast messages, MBMS messages, dedicated messages, and OMA-DM messages), as shown in FIGS. 2-6 and 10.

In embodiments where the electronic device circuitry 1400 is an eNB, UE, BTS, and/or a network node, or is incorporated into or is otherwise part of an eNB, UE, BTS, and/or a network node, the transmit circuitry 1410 can transmit configuration information and relayed V2X messages, as shown in FIGS. 2-6 and 10. The receive circuitry 1412 can receive V2X messages and configuration messages, as shown in FIGS. 2-6 and 10.

In certain embodiments, the electronic device circuitry 1400 shown in FIG. 14 is operable to perform one or more methods, such as the methods shown in FIGS. 11-13.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

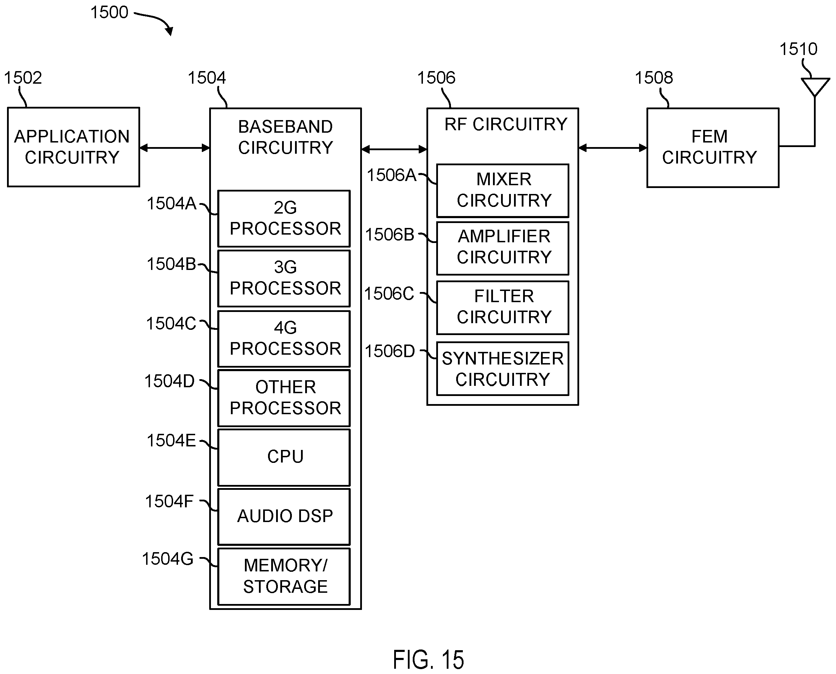

Embodiments described herein may be implemented into a system using any suitably configured hardware and/or software. FIG. 15 is a block diagram illustrating, for one embodiment, example components of a user equipment (UE) (e.g., UE 105), UE, mobile station (MS) device, or evolved Node B (eNB) 110. In some embodiments, the UE device 1500 may include application circuitry 1502, baseband circuitry 1504, Radio Frequency (RF) circuitry 1506, front-end module (FEM) circuitry 1508, and one or more antennas 1510, coupled together at least as shown in FIG. 15.

The application circuitry 1502 may include one or more application processors. By way of non-limiting example, the application circuitry 1502 may include one or more single-core or multi-core processors. The processor(s) may include any combination of general-purpose processors and dedicated processors (e.g., graphics processors, application processors, etc.). The processor(s) may be operably coupled and/or include memory/storage, and may be configured to execute instructions stored in the memory/storage to enable various applications and/or operating systems to run on the system.

By way of non-limiting example, the baseband circuitry 1504 may include one or more single-core or multi-core processors. The baseband circuitry 1504 may include one or more baseband processors and/or control logic. The baseband circuitry 1504 may be configured to process baseband signals received from a receive signal path of the RF circuitry 1506. The baseband 1504 may also be configured to generate baseband signals for a transmit signal path of the RF circuitry 1506. The baseband processing circuitry 1504 may interface with the application circuitry 1502 for generation and processing of the baseband signals, and for controlling operations of the RF circuitry 1506.

By way of non-limiting example, the baseband circuitry 1504 may include at least one of a second generation (2G) baseband processor 1504A, a third generation (3G) baseband processor 1504B, a fourth generation (4G) baseband processor 1504C, other baseband processor(s) 1504D for other existing generations, and generations in development or to be developed in the future (e.g., fifth generation (5G), 6G, etc.). The baseband circuitry 1504 (e.g., at least one of baseband processors 1504A-1504D) may handle various radio control functions that enable communication with one or more radio networks via the RF circuitry 1506. By way of non-limiting example, the radio control functions may include signal modulation/demodulation, encoding/decoding, radio frequency shifting, other functions, and combinations thereof. In some embodiments, modulation/demodulation circuitry of the baseband circuitry 1504 may be programmed to perform Fast-Fourier Transform (FFT), precoding, constellation mapping/demapping functions, other functions, and combinations thereof. In some embodiments, encoding/decoding circuitry of the baseband circuitry 1504 may be programmed to perform convolutions, tail-biting convolutions, turbo, Viterbi, Low Density Parity Check (LDPC) encoder/decoder functions, other functions, and combinations thereof. Embodiments of modulation/demodulation and encoder/decoder functions are not limited to these examples, and may include other suitable functions.

In some embodiments, the baseband circuitry 1504 may include elements of a protocol stack. By way of non-limiting example, elements of an evolved universal terrestrial radio access network (E-UTRAN) protocol including, for example, physical (PHY), media access control (MAC), radio link control (RLC), packet data convergence protocol (PDCP), and/or radio resource control (RRC) elements. A central processing unit (CPU) 1504E of the baseband circuitry 1504 may be programmed to run elements of the protocol stack for signaling of the PHY, MAC, RLC, PDCP and/or RRC layers. In some embodiments, the baseband circuitry 1504 may include one or more audio digital signal processor(s) (DSP) 1504F. The audio DSP(s) 1504F may include elements for compression/decompression and echo cancellation. The audio DSP(s) 1504F may also include other suitable processing elements.

The baseband circuitry 1504 may further include memory/storage 1504G. The memory/storage 1504G may include data and/or instructions for operations performed by the processors of the baseband circuitry 1504 stored thereon. In some embodiments, the memory/storage 1504G may include any combination of suitable volatile memory and/or non-volatile memory. The memory/storage 1504G may also include any combination of various levels of memory/storage including, but not limited to, read-only memory (ROM) having embedded software instructions (e.g., firmware), random access memory (e.g., dynamic random access memory (DRAM)), cache, buffers, etc. In some embodiments, the memory/storage 1504G may be shared among the various processors or dedicated to particular processors.

Components of the baseband circuitry 1504 may be suitably combined in a single chip, a single chipset, or disposed on a same circuit board in some embodiments. In some embodiments, some or all of the constituent components of the baseband circuitry 1504 and the application circuitry 1502 may be implemented together, such as, for example, on a system on a chip (SOC).

In some embodiments, the baseband circuitry 1504 may provide for communication compatible with one or more radio technologies. For example, in some embodiments, the baseband circuitry 1504 may support communication with an evolved universal terrestrial radio access network (E-UTRAN) and/or other wireless metropolitan area networks (WMAN), a wireless local area network (WLAN), or a wireless personal area network (WPAN). Embodiments in which the baseband circuitry 1504 is configured to support radio communications of more than one wireless protocol may be referred to as multi-mode baseband circuitry.

The RF circuitry 1506 may enable communication with wireless networks using modulated electromagnetic radiation through a non-solid medium. In various embodiments, the RF circuitry 1506 may include switches, filters, amplifiers, etc. to facilitate the communication with the wireless network. The RF circuitry 1506 may include a receive signal path which may include circuitry to down-convert RF signals received from the FEM circuitry 1508, and provide baseband signals to the baseband circuitry 1504. The RF circuitry 1506 may also include a transmit signal path which may include circuitry to up-convert baseband signals provided by the baseband circuitry 1504, and provide RF output signals to the FEM circuitry 1508 for transmission.

In some embodiments, the RF circuitry 1506 may include a receive signal path and a transmit signal path. The receive signal path of the RF circuitry 1506 may include mixer circuitry 1506A, amplifier circuitry 1506B, and filter circuitry 1506C. The transmit signal path of the RF circuitry 1506 may include filter circuitry 1506C and mixer circuitry 1506A. The RF circuitry 1506 may further include synthesizer circuitry 1506D configured to synthesize a frequency for use by the mixer circuitry 1506A of the receive signal path and the transmit signal path. In some embodiments, the mixer circuitry 1506A of the receive signal path may be configured to down-convert RF signals received from the FEM circuitry 1508 based on the synthesized frequency provided by synthesizer circuitry 1506D. The amplifier circuitry 1506B may be configured to amplify the down-converted signals.

The filter circuitry 1506C may include a low-pass filter (LPF) or band-pass filter (BPF) configured to remove unwanted signals from the down-converted signals to generate output baseband signals. Output baseband signals may be provided to the baseband circuitry 1504 for further processing. In some embodiments, the output baseband signals may include zero-frequency baseband signals, although this is not a requirement. In some embodiments, the mixer circuitry 1506A of the receive signal path may comprise passive mixers, although the scope of the embodiments is not limited in this respect.

In some embodiments, the mixer circuitry 1506A of the transmit signal path may be configured to up-convert input baseband signals based on the synthesized frequency provided by the synthesizer circuitry 1506D to generate RF output signals for the FEM circuitry 1508. The baseband signals may be provided by the baseband circuitry 1504 and may be filtered by filter circuitry 1506C. The filter circuitry 1506C may include a low-pass filter (LPF), although the scope of the embodiments is not limited in this respect. In some embodiments, the mixer circuitry 1506A of the receive signal path and the mixer circuitry 1506A of the transmit signal path may include two or more mixers, and may be arranged for quadrature downconversion and/or upconversion, respectively. In some embodiments, the mixer circuitry 1506A of the receive signal path and the mixer circuitry 1506A of the transmit signal path may include two or more mixers and may be arranged for image rejection (e.g., Hartley image rejection). In some embodiments, the mixer circuitry 1506A of the receive signal path and the mixer circuitry 1506A may be arranged for direct downconversion and/or direct upconversion, respectively. In some embodiments, the mixer circuitry 1506A of the receive signal path and the mixer circuitry 1506A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In such embodiments, the RF circuitry 1506 may include analog-to-digital converter (ADC) and digital-to-analog converter (DAC) circuitry, and the baseband circuitry 1504 may include a digital baseband interface to communicate with the RF circuitry 1506.

In some dual-mode embodiments, separate radio IC circuitry may be provided for processing signals for each spectrum, although the scope of the embodiments is not limited in this respect.

In some embodiments, the synthesizer circuitry 1506D may include one or more of a fractional-N synthesizer and a fractional N/N+1 synthesizer, although the scope of the embodiments is not limited in this respect as other types of frequency synthesizers may be suitable. For example, synthesizer circuitry 1506D may include a delta-sigma synthesizer, a frequency multiplier, a synthesizer comprising a phase-locked loop with a frequency divider, other synthesizers, and combinations thereof.

The synthesizer circuitry 1506D may be configured to synthesize an output frequency for use by the mixer circuitry 1506A of the RF circuitry 1506 based on a frequency input and a divider control input. In some embodiments, the synthesizer circuitry 1506D may be a fractional N/N+1 synthesizer.

In some embodiments, frequency input may be provided by a voltage controlled oscillator (VCO), although that is not a requirement. Divider control input may be provided by either the baseband circuitry 1504 or the applications processor 1502 depending on the desired output frequency. In some embodiments, a divider control input (e.g., N) may be determined from a look-up table based on a channel indicated by the applications processor 1502.

The synthesizer circuitry 1506D of the RF circuitry 1506 may include a divider, a delay-locked loop (DLL), a multiplexer, and a phase accumulator. In some embodiments, the divider may include a dual modulus divider (DMD), and the phase accumulator may include a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump, and a D-type flip-flop. In such embodiments, the delay elements may be configured to break a VCO period into Nd equal packets of phase, where Nd is the number of delay elements in the delay line. In this way, the DLL may provide negative feedback to help ensure that the total delay through the delay line is one VCO cycle.

In some embodiments, the synthesizer circuitry 1506D may be configured to generate a carrier frequency as the output frequency. In some embodiments, the output frequency may be a multiple of the carrier frequency (e.g., twice the carrier frequency, four times the carrier frequency, etc.) and used in conjunction with a quadrature generator and divider circuitry to generate multiple signals at the carrier frequency with multiple different phases with respect to each other. In some embodiments, the output frequency may be a LO frequency (fLO). In some embodiments, the RF circuitry 1506 may include an IQ/polar converter.

The FEM circuitry 1508 may include a receive signal path which may include circuitry configured to operate on RF signals received from one or more antennas 1510, amplify the received signals, and provide the amplified versions of the received signals to the RF circuitry 1506 for further processing. The FEM circuitry 1508 may also include a transmit signal path which may include circuitry configured to amplify signals for transmission provided by the RF circuitry 1506 for transmission by at least one of the one or more antennas 1510.

In some embodiments, the FEM circuitry 1508 may include a TX/RX switch configured to switch between a transmit mode and a receive mode operation. The FEM circuitry 1508 may include a receive signal path and a transmit signal path. The receive signal path of the FEM circuitry 1508 may include a low-noise amplifier (LNA) to amplify received RF signals and provide the amplified received RF signals as an output (e.g., to the RF circuitry 1506). The transmit signal path of the FEM circuitry 1508 may include a power amplifier (PA) configured to amplify input RF signals (e.g., provided by RF circuitry 1506), and one or more filters configured to generate RF signals for subsequent transmission (e.g., by one or more of the one or more antennas 1510).

In some embodiments, the MS device 1500 may include additional elements such as, for example, memory/storage, a display, a camera, one or more sensors, an input/output (I/O) interface, other elements, and combinations thereof.

In some embodiments, the MS device 1500 may be configured to perform one or more processes, techniques, and/or methods as described herein, or portions thereof.

### EXAMPLES

The following examples pertain to further embodiments.
Example 1 is an apparatus for use in a user equipment (UE). The apparatus includes a memory and one or more processing units. The memory stores a communication mode configuration. The one or more processing units process a message from a radio access network (RAN) node, the message identifying a communication mode to use for vehicle-to-anything (V2X) communication, store the identified communication mode in the communication mode configuration, and communicate via at least one of a first interface and a second interface based on the communication mode configuration, where the first interface comprises an air interface with the RAN node, and the second interface comprises an air interface with a device.
Example 2 is the apparatus of example 1 or any of the other examples described herein, where the message is a broadcast message that is broadcast to all devices within a cell.
Example 3 is the apparatus of example 1 or any of the other examples described herein, where the message is a multimedia broadcast multicast services (MBMS) message that is broadcast to all devices within a cell or multicast to a selected group of devices within the cell.
Example 4 is the apparatus of example 1 or any of the other examples described herein, where the message is a dedicated message that is broadcast to a device, the dedicated message being selected from the group consisting of a radio resource control (RRC) message, a medium access control (MAC) message, a radio link control (RLC) message, and an open mobile alliance (OMA) device management (OMA-DM) message.
Example 5 is the apparatus of example 1 or any of the other examples described herein, where the communication mode configuration includes a pre-configured communication mode.
Example 6 is the apparatus of example 5 or any of the other examples described herein, where the pre-configured communication mode is configured based on an open mobile alliance (OMA) device management (OMA-DM) message.
Example 7 is the apparatus of example 1 or any of the other examples described herein, where the communication mode is selected from the group consisting of: communication via the first interface, communication via the second interface, and communication via both the first interface and the second interface.
Example 8 is the apparatus of example 1 or any of the other examples described herein, where the first interface is a cellular interface and the second interface is a device-to-device (D2D) interface.
Example 9 is the apparatus of example 8 or any of the other examples described herein, where the first interface is an evolved universal mobile telecommunications systems (UMTS) terrestrial radio access (E-UTRA) Uu interface.
Example 10 is the apparatus of example 1 or any of the other examples described herein, where the RAN node provide at least one road side unit (RSU) service.
Example 11 is an apparatus for use in a user equipment (UE). The apparatus includes a memory and one or more processing units. The memory stores a mapping of vehicle-to-anything (V2X) message type to communication mode. The one or more processing units generate a V2X message having a V2X message type, determine a communication mode to use for the V2X message based on the V2X message type and the mapping of V2X message type to communication mode, and communicate the V2X message using the determined communication mode.
Example 12 is the apparatus of example 11 or any of the other examples described herein, where the V2X message type is selected from the group consisting of a probe message, a warning message, and a critical message.
Example 13 is the apparatus of example 11 or any of the other examples described herein, where the mapping of V2X message type to communication mode includes at least one of: a first communication mode where a V2X message is communicated via a cellular interface, a second communication mode where a V2X message is communicated via a device-to-device (D2D) interface, and a third communication mode where a V2X message is communicated via both the cellular interface and the D2D interface.
Example 14 is the apparatus of example 11 or any of the other examples described herein, where the one or more processing units process a message from a radio access node (RAN) node, the message identifying an updated mapping of V2X message type to communication mode, and update the mapping of V2X message type to communication mode based on the message from the RAN node.
Example 15 is the apparatus of example 14 or any of the other examples described herein, where the message is selected from the group consisting of: a broadcast message, a multimedia broadcast multicast services (MBMS) message, a dedicated message that is broadcast to a device, the dedicated message being selected from the group consisting of a radio resource control (RRC) message, a medium access control (MAC) message, a radio link control (RLC) message, and an open mobile alliance (OMA) device management (OMA-DM) message.
Example 16 is the apparatus of example 11 or any of the other examples described herein, where the mapping of vehicle-to-anything (V2X) message type to communication mode is preconfigured by the RAN node.
Example 17 is an apparatus for use in a user equipment (UE). The apparatus includes a memory and one or more processing units. The memory stores a mapping of vehicle-to-anything (V2X) message type to processing queue, where each processing queue is mapped to a different logical channel. The one or more processing units generate a V2X message, having a V2X message type, determine a processing queue to use for the V2X message based on the V2X message type and the mapping of V2X message type to processing queue, and process the V2X message via the determined logical channel.
Example 18 is the apparatus of example 17 or any of the other examples described herein, where each processing queue is associated with a different transmission priority.
Example 19 is the apparatus of example 18 or any of the other examples described herein, where transmission priority is given based on the associated logical channel.
Example 20 is the apparatus of example 17 or any of the other examples described herein, where each V2X message type is mapped to a different processing queue.
Example 21 is the apparatus of example 17 or any of the other examples described herein, where each logical channel is associated with a different interface.
Example 22 is the apparatus of example 21 or any of the other examples described herein, where the interface is selected from the group consisting of: internet protocol (IP) over an evolved universal mobile telecommunications systems (UMTS) terrestrial radio access (E-UTRA) Uu interface, IP over a device-to-device (D2D) interface using licensed spectrum, IP over D2D interface using unlicensed spectrum, V2X protocol over E-UTRA Uu interface, V2X protocol over D2D interface using licensed spectrum, and V2X protocol over D2D interface using unlicensed spectrum.
Example 23 is a method for vehicle-to-anything (V2X) communication. The method includes processing a message from a radio access network (RAN) node, the message identifying a communication mode configuration to use for V2X communication, generating a V2X message, and communicating the V2X message via at least one of a first interface and a second interface based on the communication mode configuration, where the first interface comprises an air interface with the RAN node, and the second interface comprises an air interface with a device.
Example 24 is the method of example 23 or any of the other examples described herein, where the communication mode configuration specifies a communication mode, and where the communication mode is selected from the group consisting of: communication via the first interface, communication via the second interface, and communication via both the first interface and the second interface.
Example 25 is the method of example 24 or any of the other examples described herein, where the communication mode configuration specifies a communication mode to use for all V2X communication.
Example 26 is the method of example 24 or any of the other examples described herein, where the communication mode configuration specifies a mapping of V2X message type to communication mode.
Example 27 is the method of example 26 or any of the other examples described herein, where the method further includes determining a V2X message type of the V2X message, and determining a communication mode to use for communicating the V2X message based on the determined V2X message type and the mapping of V2X message type to communication mode.
Example 28 is the method of example 24 or any of the other examples described herein, where the communication mode configuration specifies a mapping of V2X message type to processing queue, where each processing queue is mapped to a different logical channel and each logical channel is associated with a different interface.
Example 29 is the method of example 28 or any of the other examples described herein, where the method further includes determining a V2X message type of the V2X message, determining at least one processing queue to use for communicating the V2X message based on the determined V2X message type and the mapping of V2X message type to processing queue, and processing the V2X message via the determined processing queues, where each of the determined processing queues is associated with a different interface, where the V2X message is communicated via each interface associated with the determined processing queues.
Example 30 is the method of example 23 or any of the other examples described herein, where each of the first interface and the second interface is selected from the group consisting of: internet protocol (IP) over an evolved universal mobile telecommunications systems (UMTS) terrestrial radio access (E-UTRA) Uu interface, IP over a device-to-device (D2D) interface using licensed spectrum, IP over D2D interface using unlicensed spectrum, V2X protocol over E-UTRA Uu interface, V2X protocol over D2D interface using licensed spectrum, and V2X protocol over D2D interface using unlicensed spectrum.
Example 31 is a method for vehicle-to-anything (V2X) communication. The method includes determining a number of user equipments (UEs) within an area, selecting a communication mode configuration for at least one UE within the area based on the number of UEs within the area, where the communication mode configuration specifies at least one of a first interface and a second interface to use for V2X communication, where the first interface is an air interface with the RAN node, and the second interface is an air interface with a device, and generating a message for the at least one UE, the message identifying the selected communication mode configuration.
Example 32 is the method of example 31 or any of the other examples described herein, where the communication mode configuration specifies a communication mode to use for all V2X communication.
Example 33 is the method of example 31 or any of the other examples described herein, where the communication mode configuration specifies a mapping of V2X message type to communication mode.
Example 34 is the method of example 31 or any of the other examples described herein, where the communication mode configuration specifies a mapping of V2X message type to processing queue, where each processing queue is mapped to a different logical channel and each logical channel is associated with a different interface.
Example 35 is an apparatus that includes means to perform any of the methods described herein.
Example 36 is a machine-readable storage including machine-readable instructions, that when executed, cause a processor to implement a method or realize an apparatus as described herein.

Some of the infrastructure that can be used with embodiments disclosed herein is already available, such as general-purpose computers, mobile phones, computer programming tools and techniques, digital storage media, and communications networks. A computing device may include a processor such as a microprocessor, microcontroller, logic circuitry, or the like. The computing device may include a computer-readable storage device such as non-volatile memory, static random access memory (RAM), dynamic RAM, read-only memory (ROM), disk, tape, magnetic, optical, flash memory, or other computer-readable storage medium.

Various aspects of certain embodiments may be implemented using hardware, software, firmware, or a combination thereof. A component or module may refer to, be part of, or include an application specific integrated circuit (ASIC), an electronic circuit, a processor (shared, dedicated, or group), and/or memory (shared, dedicated or group) that execute one or more software or firmware programs, a combinational logic circuit, and/or other suitable components that provide the described functionality. As used herein, a software module or component may include any type of computer instruction or computer executable code located within or on a non-transitory computer-readable storage medium. A software module or component may, for instance, comprise one or more physical or logical blocks of computer instructions, which may be organized as a routine, program, object, component, data structure, etc., which performs one or more tasks or implements particular abstract data types.

In certain embodiments, a particular software module or component may comprise disparate instructions stored in different locations of a computer-readable storage medium, which together implement the described functionality of the module or component. Indeed, a module or component may comprise a single instruction or many instructions, and may be distributed over several different code segments, among different programs, and across several computer-readable storage media. Some embodiments may be practiced in a distributed computing environment where tasks are performed by a remote processing device linked through a communications network.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the disclosure is not to be limited to the details given herein, but may be modified within the scope and equivalents of the appended claims.

Those having skill in the art will appreciate that many changes may be made to the details of the above-described embodiments without departing from the underlying principles of the disclosure. The scope should, therefore, be determined only by the following claims.

## Claims

1. A method for vehicle-to-anything, V2X, communication, comprising:
processing a message (205, 245) from a radio access network, RAN, node (110), the message identifying a communication mode configuration to use for V2X communication;
generating a V2X message (225, 265); and
communicating the V2X message via at least one of a first interface (250) and a second interface (210) based on the communication mode configuration, wherein the first interface (250) comprises an air interface with the RAN node (110), and the second interface (210) comprises a device-to-device, D2D, air interface with a device (105-B).

2. The method of claim 1, wherein the communication mode configuration specifies a communication mode, and wherein the communication mode is selected from the group consisting of:
communication via the first interface (250);
communication via the second interface (210); and
communication via both the first interface and the second interface (250, 210).

3. The method of claim 2, wherein the communication mode configuration specifies a communication mode to use for all V2X communication.

4. The method of claim 2, wherein the communication mode configuration specifies a mapping (615) of V2X message type to communication mode.

5. The method of claim 4, further comprising:
determining a V2X message type of the V2X message;
determining a communication mode to use for communicating the V2X message based on the determined V2X message type and the mapping (615) of V2X message type to communication mode.

6. The method of claim 2, wherein the communication mode configuration specifies a mapping of V2X message type to processing queue, wherein each processing queue is mapped to a different logical channel (940) and each logical channel (940) is associated with a different interface (960).

7. The method of claim 6, further comprising:
determining a V2X message type of the V2X message;
determining at least one processing queue to use for communicating the V2X message based on the determined V2X message type and the mapping of V2X message type to processing queue; and
processing the V2X message via the determined processing queues, wherein each of the determined processing queues is associated with a different interface (960), wherein the V2X message is communicated via each interface (960) associated with the determined processing queues.

8. The method of claim 1, wherein the first interface is selected from the group consisting of:
Internet protocol, IP, over an evolved universal mobile telecommunications systems, UMTS, terrestrial radio access, E-UTRA, Uu interface (960-A),
V2X protocol over E-UTRA Uu interface (960-D),
and wherein the second interface is selected from the group consisting of:
IP over a device-to-device, D2D, interface using licensed spectrum (960-B),
IP over D2D interface using unlicensed spectrum (960-C),
V2X protocol over D2D interface using licensed spectrum (960-E), and
V2X protocol over D2D interface using unlicensed spectrum (960-F).

9. The method of claim 1, wherein the first interface comprises a cellular interface.

10. A method for vehicle-to-anything, V2X, communication, comprising:
determining a number of user equipments, UEs (105-A, 105-B), within an area;
selecting a communication mode configuration for at least one UE (105-A) within the area based on the number of UEs (105-A, 105-B) within the area, wherein the communication mode configuration specifies at least one of a first interface (250) and a second interface (210) to use for V2X communication, wherein the first interface (250) comprises an air interface with the RAN node, and the second interface (210) comprises a device-to-device, D2D, air interface with a device; and
generating a message (205, 245) for the at least one UE (105-B), the message identifying the selected communication mode configuration.

11. The method of claim 10, wherein the communication mode configuration specifies a communication mode to use for all V2X communication.

12. The method of claim 10, wherein the communication mode configuration specifies a mapping (615) of V2X message type to communication mode.

13. The method of claim 10, wherein the communication mode configuration specifies a mapping of V2X message type to processing queue, wherein each processing queue is mapped to a different logical channel (940) and each logical channel is associated with a different interface (960).

14. An apparatus comprising means to perform the method of any of claims 1-13.

15. Machine-readable storage including machine-readable instructions, when executed by a processor, causes the processor to implement a method as claimed in any of claims 1-13.

## Patentansprüche

1. Verfahren für Vehicle-To-Anything, V2X, Kommunikation, umfassend:
Verarbeiten einer Nachricht (204, 245) von einem Funkzugangsnetzwerk-, RAN-, Knoten (110), wobei die Nachricht eine Kommunikationsmoduskonfiguration zur Verwendung für V2X Kommunikation identifiziert;
Erzeugen einer V2X Nachricht (225, 265); und
Kommunizieren der V2X Nachricht mittels mindestens einer von einer ersten Schnittstelle (250) und einer zweiten Schnittstelle (210) basierend auf der Kommunikationsmoduskonfiguration, wobei die erste Schnittstelle (250) eine Luftschnittstelle mit dem RAN-Knoten (110) umfasst, und die zweite Schnittstelle (210) eine Gerät-zu-Gerät-, D2D-, Luftschnittstelle mit einer Vorrichtung (105-B) umfasst.

2. Verfahren nach Anspruch 1, wobei die Kommunikationsmoduskonfiguration einen Kommunikationsmodus spezifiziert, und wobei der Kommunikationsmodus ausgewählt wird aus einer Gruppe bestehend aus:
Kommunikation mittels der ersten Schnittstelle (250);
Kommunikation mittels der zweite Schnittstelle (210); und
Kommunikation mittels beider der ersten Schnittstelle und der zweiten Schnittstelle (250, 210).

3. Verfahren nach Anspruch 2, wobei die Kommunikationsmoduskonfiguration einen Kommunikationsmodus spezifiziert, der für jegliche V2X Kommunikation verwendet werden soll.

4. Verfahren nach Anspruch 2, wobei die Kommunikationsmoduskonfiguration ein Abbilden (615) von V2X Nachricht auf Kommunikationsmodus spezifiziert.

5. Verfahren nach Anspruch 4, ferner umfassend:
Bestimmen eines V2X Nachrichtentyps der V2X Nachricht;
Bestimmen eines Kommunikationsmoduses, der zum Kommunizieren der V2X Nachricht verwendet werden soll, basierend auf dem bestimmten V2x Nachrichtentyp und dem Abbilden (615) von V2X Nachrichtentyp auf Kommunikationsmodus.

6. Verfahren nach Anspruch 2, wobei die Kommunikationsmoduskonfiguration ein Abbilden von V2X Nachrichtentyp auf Verarbeitungswarteschlange spezifiziert, wobei jede Verarbeitungswarteschlange auf einen unterschiedlichen logischen Kanal (940) abgebildet wird und jeder logische Kanal (940) mit einer verschiedenen Schnittstelle (960) assoziiert ist.

7. Verfahren nach Anspruch 6, ferner umfassend:
Bestimmen eines V2X Nachrichtentyps der V2X Nachricht;
Bestimmen mindestens einer Verarbeitungswarteschlange, die zum Kommunizieren der V2x Nachricht verwendet werden soll, basierend auf dem bestimmten V2X Nachrichtentyp und dem Abbilden von V2X Nachrichtentyp auf Verarbeitungswarteschlange; und
Verarbeiten der V2X Nachricht mittels der bestimmten Verarbeitungswarteschlangen, wobei jeder der bestimmten Verarbeitungswarteschlangen mit einer verschiedenen Schnittstelle (960) assoziiert ist, wobei die V2X Nachricht mittels jeder Schnittstelle (960) kommuniziert wird, die mit den bestimmten Verarbeitungswarteschlangen assoziiert ist.

8. Verfahren nach Anspruch 1, wobei die erste Schnittstelle ausgewählt wird aus einer Gruppe bestehend aus:
Internetprotokoll, IP, über eine Evolved Universal Mobile Telecommunications Systems, UMTS, Terrestrial Radio Access, E-UTRA, Uu Schnittstelle (960-A),
V2X Protokoll über E-UTRA Uu Schnittstelle (960-D),
und wobei die zweite Schnittstelle ausgewählt wird aus einer Gruppe bestehend aus:
IP über eine Gerät-zu-Gerät, D2D, Schnittstelle unter Verwenden eines lizenzierten Spektrums (960-B),
IP über eine D2D Schnittstelle und Verwenden nicht lizenziertem Spektrum (960-C), und
V2X Protokoll über D2D Schnittstelle unter Verwenden von lizenziertem Spektrum (960-E), und
V2X Protokoll über D2D Schnittstelle unter Verwenden von nicht lizenziertem Spektrum (960-F).

9. Verfahren nach Anspruch 1, wobei die erste Schnittstelle eine zelluläre Schnittstelle umfasst.

10. Verfahren für Vehicle-To-Anything, V2X, Kommunikation, umfassend:
Bestimmen einer Anzahl von Benutzerausrüstungen, UEs (105-A, 105-B), innerhalb eines Gebiets;
Auswählen einer Kommunikationsmoduskonfiguration für mindestens eine UE (105-A) innerhalb des Gebiets basierend auf der Anzahl von UEs (105-A 105-B) innerhalb des Gebiets, wobei die Kommunikationsmoduskonfiguration mindestens eine von einer ersten Schnittstelle (250) und einer zweiten Schnittstelle (210) spezifiziert, die für V2X Kommunikation verwendet werden soll, wobei die erste Schnittstelle (250) eine Luftschnittstelle mit dem RAN Knoten umfasst, und die zweite Schnittstelle (210) eine Gerät-zu-Gerät, D2D, Luftschnittstelle mit einer Vorrichtung umfasst; und
Erzeugen einer Nachricht (205, 245) für die mindestens eine UE (105-B), wobei die Nachricht die ausgewählte Kommunikationsmoduskonfiguration identifiziert.

11. Verfahren nach Anspruch 10, wobei die Kommunikationsmoduskonfiguration einen Kommunikationsmodus für jegliche V2X Kommunikation spezifiziert.

12. Verfahren nach Anspruch 10, wobei die Kommunikationsmoduskonfiguration ein Abbilden (615) von V2X Nachricht auf Kommunikationsmodus spezifiziert.

13. Verfahren nach Anspruch 10, wobei die Kommunikationsmoduskonfiguration ein Abbilden von V2X Nachrichtentyp auf Verarbeitungswarteschlange spezifiziert, wobei jede Verarbeitungswarteschlange auf einen unterschiedlichen logischen Kanal (940) abgebildet wird und jeder logische Kanal (940) mit einer verschiedenen Schnittstelle (960) assoziiert ist.

14. Vorrichtung umfassend Mittel zum Durchführen des Verfahrens nach einem der Ansprüche 1-13.

15. Maschinenlesbarer Speicher, der maschinenlesbare Anweisungen beinhaltet, die, wenn sie durch einen Prozessor ausgeführt werden, den Prozessor veranlassen, ein Verfahren wie in einem der Ansprüche 1-13 beansprucht umzusetzen.

## Revendications

1. Un procédé de communication véhicule-vers-tout, V2X, comprenant :
le traitement d'un message (205, 245) provenant d'un nœud de réseau d'accès radio, RAN, (110), le message identifiant une configuration de mode de communication à utiliser pour une communication V2X ;
la génération d'un message V2X (225, 265) ; et
la communication du message V2X par l'intermédiaire d'au moins l'une d'une première interface (250) et d'une seconde interface (210) sur la base de la configuration de mode de communication, dans lequel la première interface (250) comprend une interface hertzienne avec le nœud RAN (110), et la seconde interface (210) comprend une interface hertzienne dispositif-à-dispositif, D2D, avec un dispositif (105-B).

2. Le procédé selon la revendication 1, dans lequel la configuration de mode de communication spécifie un mode de communication, et dans lequel le mode de communication est sélectionné dans le groupe se composant de :
une communication par l'intermédiaire de la première interface (250) ;
une communication par l'intermédiaire de la seconde interface (210) ; et
une communication par l'intermédiaire à la fois de la première interface et de la seconde interface (250, 210).

3. Le procédé selon la revendication 2, dans lequel la configuration de mode de communication spécifie un mode de communication à utiliser pour toutes les communications V2X.

4. Le procédé selon la revendication 2, dans lequel la configuration de mode de communication spécifie un mappage (615) d'un type de message V2X vers un mode de communication.

5. Le procédé selon la revendication 4, comprenant en outre :
la détermination d'un type de message V2X du message V2X ;
la détermination d'un mode de communication à utiliser pour communiquer le message V2X sur la base du type de message V2X déterminé et du mappage (615) du type de message V2X vers un mode de communication.

6. Le procédé selon la revendication 2, dans lequel la configuration de mode de communication spécifie un mappage d'un type de message V2X vers une file d'attente de traitement, dans lequel chaque file d'attente de traitement est mappée vers un canal logique (940) différent et chaque canal logique (940) est associé à une interface (960) différente.

7. Le procédé selon la revendication 6, comprenant en outre :
la détermination d'un type de message V2X du message V2X ;
la détermination d'au moins une file d'attente de traitement à utiliser pour communiquer le message V2X sur la base du type de message V2X déterminé et du mappage d'un type de message V2X avec une file d'attente de traitement ; et
le traitement du message V2X par l'intermédiaire des files d'attente de traitement déterminées, dans lequel chacune des files d'attente de traitement déterminées est associée à une interface (960) différente, dans lequel le message V2X est communiqué par l'intermédiaire de chaque interface (960) associée aux files d'attente de traitement déterminées.

8. Le procédé selon la revendication 1, dans lequel la première interface est sélectionnée dans le groupe se composant :
d'une interface Uu de protocole Internet, IP, sur un accès radio terrestre de système de télécommunication mobile universel, UMTS, évolué, E-UTRA, (960-A),
d'une interface Uu de protocole V2X sur E-UTRA (960-D),
et dans lequel la seconde interface est sélectionnée dans le groupe se composant :
d'une interface IP sur dispositif-à-dispositif, D2D, utilisant un spectre avec licence (960-B) ;
d'une interface IP sur D2D utilisant un spectre sans licence (960-C),
d'une interface de protocole V2X sur D2D utilisant un spectre avec licence (960-E), et
d'une interface de protocole V2X sur D2D utilisant un spectre sans licence (960-F).

9. Le procédé selon la revendication 1, dans lequel la première interface comprend une interface cellulaire.

10. Un procédé de communication véhicule-vers-tout, V2X, comprenant :
la détermination d'un nombre d'équipements d'utilisateur, UE, (105-A, 105-B), à l'intérieur d'une zone ;
la sélection d'une configuration de mode de communication pour au moins un UE (105-A) à l'intérieur de la zone sur la base du nombre d'UE (105-A, 105-B) à l'intérieur de la zone, dans lequel la configuration de mode de communication spécifie au moins l'une d'une première interface (250) et d'une seconde interface (210) à utiliser pour une communication V2X, dans lequel la première interface (250) comprend une interface hertzienne avec le nœud RAN, et la seconde interface (210) comprend une interface hertzienne dispositif-à-dispositif, D2D, avec un dispositif ; et
la génération d'un message (205, 245) pour l'au moins un UE (105-B), le message identifiant la configuration de mode de communication sélectionnée.

11. Le procédé selon la revendication 10, dans lequel la configuration de mode de communication spécifie un mode de communication à utiliser pour toutes les communications V2X.

12. Le procédé selon la revendication 10, dans lequel la configuration de mode de communication spécifie un mappage (615) d'un type de message V2X vers un mode de communication.

13. Le procédé selon la revendication 10, dans lequel la configuration de mode de communication spécifie un mappage d'un type de message V2X vers une file d'attente de traitement, dans lequel chaque file d'attente de traitement est mappée vers un canal logique (940) différent et chaque canal logique est associé à une interface (960) différente.

14. Un appareil comprenant des moyens pour mettre en œuvre le procédé selon l'une des revendications 1 à 13.

15. Une mémoire lisible par machine incluant des instructions lisibles par machine qui, lorsqu'elles sont exécutées par un processeur, amènent le processeur à mettre en œuvre un procédé selon l'une des revendications 1 à 13.
